(19) Europäisches Patentamt
European Patent Office
Office européen des brevets

(11) **EP 2 729 768 B1**

(12) **EUROPÄISCHE PATENTSCHRIFT**

(45) Veröffentlichungstag und Bekanntmachung des Hinweises auf die Patenterteilung:
**17.05.2017  Patentblatt 2017/20**

(51) Int Cl.:
*G01D 5/244* *(2006.01)*    *G01B 21/04* *(2006.01)*

(21) Anmeldenummer: **11733655.2**

(22) Anmeldetag: **08.07.2011**

(86) Internationale Anmeldenummer:
**PCT/EP2011/061684**

(87) Internationale Veröffentlichungsnummer:
**WO 2013/007286 (17.01.2013 Gazette 2013/03)**

(54) **KALIBRIERUNG UND BETRIEB VON DREHVORRICHTUNGEN, INSBESONDERE ZUM DREHEN VON TASTKÖPFEN UND/ODER TASTERN VON KOORDINATENMESSGERÄTEN**

CALIBRATION AND OPERATION OF ROTATING DEVICES, IN PARTICULAR FOR ROTATING SENSING HEADS AND/OR PROBES OF COORDINATE MEASURING DEVICES

CALIBRAGE ET FONCTIONNEMENT DE DISPOSITIFS ROTATIFS, EN PARTICULIER POUR LES TÊTES DE DÉTECTION ET/OU LES PALPEURS DES APPAREILS DE MESURE DE COORDONNÉES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**14.05.2014  Patentblatt 2014/20**

(73) Patentinhaber: **Carl Zeiss Industrielle Messtechnik GmbH**
**73447 Oberkochen (DE)**

(72) Erfinder:
• **ENGEL, Thomas**
  **73432 Aalen (DE)**
• **SEITZ, Dominik**
  **73525 Schwäbisch Gmünd (DE)**
• **HOLZWARTH, Fabian**
  **73486 Adelmannsfelden (DE)**
• **SAGEMÜLLER, Rainer**
  **73434 Aalen (DE)**

(74) Vertreter: **Brunotte, Joachim Wilhelm Eberhard**
**Patentanwälte Bressel und Partner mbB**
**Potsdamer Platz 10**
**10785 Berlin (DE)**

(56) Entgegenhaltungen:
**EP-A1- 0 325 924      EP-A1- 1 944 582**
**WO-A2-2011/064317    DE-A1- 19 907 326**

**Beschreibung**

Die Erfindung betrifft ein Verfahren zum Kalibrieren einer Messanordnung zum Bestimmen von Drehpositionen einer Drehvorrichtung, die einen ersten Teil und einen relativ zu dem ersten Teil um eine Drehachse drehbaren zweiten Teil aufweist. Die Erfindung betrifft außerdem ein Verfahren zum Betreiben einer Drehvorrichtung, die eine Messanordnung zum Bestimmen von Drehpositionen aufweist. Die Drehvorrichtung ist insbesondere Bestandteil eines Koordinatenmessgeräts, das ausgestaltet ist, Koordinaten eines Werkstücks zu messen, im Folgenden kurz: KMG. Ferner betrifft die Erfindung eine Kalibrieranordnung zum Kalibrieren der genannten Messanordnung und die Drehvorrichtung.

Z.B. in US 2001/0025427 A1 werden Drehvorrichtungen für Koordinatenmessgeräte beschrieben, die zwei rotatorische Freiheitsgrade aufweisen. Die Drehachsen der Drehvorrichtung verlaufen etwa senkrecht zueinander und ermöglichen es auf diese Weise, einen an der Drehvorrichtung angebrachten Taststift über einen weiten Bereich in unterschiedliche Positionen bei unterschiedlicher Ausrichtung des Taststiftes zu bringen. Die Erfindung ist jedoch nicht auf Drehvorrichtungen mit zwei rotatorischen Freiheitsgraden beschränkt. Vielmehr gehört zum Umfang der Erfindung auch bereits eine Drehvorrichtung mit lediglich einem rotatorischen Freiheitsgrad, d.h. die beiden Teile der Drehvorrichtung sind relativ zueinander um eine Drehachse drehbar. Die Erfindung umfasst außerdem Drehvorrichtungen mit mehr als zwei rotatorischen Freiheitsgraden der Bewegung.

Nicht nur aus US 2001/0025427 A1 ist die Verwendung von Taststiften und Tastköpfen an KMG bekannt. Mit Taststiften oder anderen Tastern wird das zu vermessende Werkstück angetastet, d.h. ein Tastelement des Tasters berührt die Oberfläche des Werkstücks. Für verschiedene Messaufgaben ist es dabei günstig, wenn die Ausrichtung des Tasters mit einer Drehvorrichtung variiert werden kann. Dabei ist es jedoch wichtig, die Ausrichtung und damit die Drehposition genau zu kennen und/oder reproduzierbar einstellen zu können. Zumindest bei konventionellen KMG muss die Ausrichtung des Tasters oder die entsprechende Drehposition der Teile der Drehvorrichtung bei der Bestimmung der Koordinaten des angetasteten Oberflächenpunktes berücksichtigt werden. Entsprechende Berechnungen sind z.B. aus der genannten US 2001/0025427 A1 entnehmbar.

Die Erfindung ist jedoch nicht auf Drehvorrichtungen beschränkt, die dazu dienen, Taster zum mechanischen Antasten von Werkstücken zu drehen. Auch optische Taster oder andere Messeinrichtungen eines KMG, die bei der Messung von Koordinaten eines Werkstücks verwendet werden, können mit einer Drehvorrichtung gekoppelt sein, so dass ihre Ausrichtung durch eine entsprechende Drehbewegung der Drehvorrichtung veränderbar ist. Insbesondere kann es sich bei der Koordinatenmesseinrichtung um eine Anordnung mit einem oder mehreren Sensoren handeln, die zur Bestimmung der Position, Ausrichtung und/oder Auslenkung eines Tasters aus einer Ruhelage eingesetzt werden. Eine solche Anordnung wird auch als Tastkopf bezeichnet, an den wiederum ein Taster angekoppelt sein kann. In die Drehvorrichtung kann aber alternativ auch die Sensorik des Tastkopfes integriert sein.

Drehvorrichtungen weisen üblicherweise einen integrierten Sensor auf, der in der Lage ist, die Drehposition zu messen. Ein bekanntes Messprinzip wird z.B. in der EP 1 923 670 A1 beschrieben. Demnach ist es ein allgemeines Prinzip der Abtastung einer periodischen Teilung, dass ein Abtastkopf mit einer Sensoreinheit eine oder mehrere Teilungsperioden eines Messkörpers an dem anderen Teil der Drehvorrichtung abtastet. Auch die Drehvorrichtungen gemäß der vorliegenden Erfindung können zumindest einen Sensor aufweisen, der eine Drehposition des ersten Teils der Drehvorrichtung relativ zu dem zweiten Teil der Drehvorrichtung erfasst, wobei der Sensor insbesondere Markierungen an einem Messkörper erfasst, die sich bei einer Drehbewegung der Drehvorrichtung durch den erfassbaren Bereich des Sensors hindurchbewegen. Dabei können die Markierungen z.B. strichförmige Markierungen sein, die sich in Bezug auf die Drehachse in radialer Richtung erstrecken oder die sich parallel zur Drehachse erstrecken. Entsprechende Messkörper werden auch als Teilkreisscheiben bezeichnet. Derartige Markierungen werden üblicherweise mit optischen Sensoren erfasst. Idealerweise befindet sich eine Vielzahl der Markierungen um die Drehachse herum verteilt in gleichen Winkelabständen zueinander.

Alternativ können andere Markierungen an dem Messkörper dazu genutzt werden, die Drehbewegung zu erfassen. Möglich sind z.B. magnetische Markierungen, etwa durch eine Anordnung mit um die Drehachse herum verteilten magnetischen Elementen. Der entsprechende Sensor zur Erfassung der magnetischen Markierungen kann z.B. ein magnetoresistiver Sensor sein. Es können jedoch z.B. auch Hall-Sensoren oder andere Sensoren eingesetzt werden, die in der Lage sind, die Stärke oder Richtung eines Magnetfeldes zu erfassen.

Die Erfindung ist jedoch nicht auf Drehvorrichtungen beschränkt, die eine Winkelmesseinrichtung aufweisen, welche Markierungen an einem Messkörper erfasst. Vielmehr kann der Messkörper alternativ z.B. zumindest einen Magneten aufweisen, so dass ein entsprechendes Magnetfeld bei der Drehbewegung der Drehvorrichtung um die Drehachse gedreht wird oder umgekehrt ein drehbarer Teil der Drehvorrichtung relativ zu dem ruhenden Magnetfeld verdreht wird. Zumindest ein Sensor erfasst das Magnetfeld und es wird daraus die Drehposition ermittelt. Eine denkbare Ausgestaltung weist eine Mehrzahl von Magnetfeldsensoren auf, die um die Drehachse der Drehvorrichtung herum verteilt sind. Jeder dieser Magnetfeldsensoren ist in der Lage, die Richtung eines Magnetfeldes zu bestimmen, das momentan an dem Magnetfeldsensor vorhanden ist. Außerdem ist ein Messkörper mit zumindest einem Magneten vorgesehen. Werden die beiden relativ zueinander drehbaren Teile der Drehvorrichtung gedreht, ändert sich die Richtung des Magnetfeldes an allen Magnetfeldsensoren. Theoretisch ist es möglich, die Drehposition mit lediglich einem einzigen solchen Magnetfeldsensor zu bestimmen. Aus Gründen der Genauigkeit werden jedoch mehrere Magnetfeldsensoren eingesetzt und somit redundante Informationen über die Drehposition gewonnen und ausgewertet. Durch Kalibrierung der Drehvorrichtung kann somit ein genauerer und insbesondere genauer reproduzierbarer Wert für die Drehposition bestimmt werden.

Im Fall der Sensorik mit Magnetfeldsensoren können Bauteile der Drehvorrichtung und auch Bauteile anderer Einrichtungen das Magnetfeld des Messkörpers verändern. Dies geschieht abhängig davon, in welcher Drehposition sich die Drehvorrichtung befindet. In Bezug auf die Teile der Drehvorrichtung selbst kann der Effekt der Bauteile durch Kalibrierung weitgehend eliminiert werden. Dagegen kann der Effekt von Bauteilen anderer Einrichtungen, die erst bei der bestimmungsgemäßen Verwendung der Drehvorrichtung in der Nähe der Drehvorrichtung angeordnet sind, nicht durch Kalibrierung eliminiert werden.

Auch bei der oben erwähnten Sensorik mit um die Drehachse herum verteilten Markierungen und entsprechenden Sensoren zum Erfassen der Markierungen treten Fehler auf. Zwar beeinflussen Bauteile externer Einrichtungen nicht die Lage der Markierungen relativ zueinander (zumindest nicht, wenn nur geringe mechanische Kräfte von außen auf die Drehvorrichtung einwirken). Jedoch ist der Abstand der Markierungen nicht völlig konstant oder bekannt. Wiederum durch Einsatz zusätzlicher Sensoren, die redundante Informationen liefern, kann der Effekt aber weitgehend eliminiert werden. Dies wird in der oben erwähnten EP 1 923 670 A1 beschrieben. Dabei können die zusätzlichen Sensoren entweder lediglich bei der Kalibrierung eingesetzt werden oder zumindest teilweise auch während des Betriebes der Drehvorrichtung für ihren bestimmungsgemäßen Zweck eingesetzt werden.

Ein entsprechendes Kalibrierverfahren wird in der Veröffentlichung von Ralf B. Geckeler et al. "Calibration of angle encoders using transfer functions" beschrieben, veröffentlicht in Meas. Sci. Technol. 17 (2006) 2811-2818. Darin wird auch beschrieben, dass für die Kalibrierung ein zusätzliches Messsystem an der Drehvorrichtung installiert werden kann. Geckeler beschreibt ein Verfahren zum Kalibrieren einer Drehvorrichtung, bei dem eine Mehrzahl von Leseköpfen bei variierendem Winkelabstand zueinander um die Drehachse herum verteilt ist. Aus den von den Leseköpfen gelieferten Messsignalen werden Winkeldifferenzen der Drehpositionen gebildet. Ferner wird eine Fourier-Transformation ausgeführt und eine Transfer-Funktion angewandt, die beschreibt, wie die Fourier-Koeffizienten der Winkelabstände aus den Fourier-Koeffizienten der Winkeldifferenzen berechnet werden können. Schätzwerte der Fourier-Koeffizienten für jede Winkeldifferenz werden dann bei entsprechender Gewichtung kombiniert. Der Fehler des zu kalibrierenden Messsystems ergibt sich durch eine Summe der Fourier-Koeffizienten über die Winkeldifferenzen. Geckeler hat damit eine Reduktion des Fehlers um einen Faktor bis zu vier beobachtet.

EP 19 44 582 A1 beschreibt ein Verfahren zur Bestimmung einer Einflussgröße auf die Exzentrizität in einem Winkelmesser. Der Winkelmesser weist ein Trägerelement mit einer Detektoranordnung aus wenigstens einem optischen Detektorelement, vorzugsweise drei oder vier optischen Detektorelementen, einem Drehkörper mit einer Vielzahl um ein Musterzentrum angeordneter Musterelemente auf, wobei der Drehkörper gegenüber dem Trägerelement um eine Achse rotierbar angeordnet ist. Wenigstens ein Teil der Musterelemente wird auf die Detektoranordnung abgebildet. Positionen der auf der Detektoranordnung abgebildeten Musterelemente werden aufgelöst. Die Exzentrizität des Musterzentrums relativ zu einem Detektorzentrum der Detektoranordnung wird gemessen. Dabei erfolgt eine Vielzahl von Exzentrizitätsmessungen für unterschiedliche Drehlagen und aus der Vielzahl von Exzentrizitätsmessungen wird wenigstens eine Einflussgröße der Exzentrizität separiert, insbesondere durch Aggregatbildung oder durch Fourier-Zerlegung. Insbesondere kann eine Lage des aktuellen Drehpunkts des Drehkörpers bezüglich des Detektorzentrums als translatorische Lagerverschiebung bestimmt werden.

WO 2011/064317 A2 beschreibt ein Kalibrierverfahren und Winkelmessverfahren für eine Winkelmesseinrichtung. Ein Codeträger, welcher einen absoluten Positionscode trägt, und zumindest zwei Leseköpfe, die eine fixe, bekannte Winkellage mit einem Winkelabstand insbesondere von mehr als 50° relativ zueinander aufweisen, sind Teil der Winkelmesseinrichtung. Der Codeträger ist gegenüber den Leseköpfen drehbar. Die Winkelpositionswerte der Leseköpfe werden in einer Winkelstellung bestimmt. Durch Vergleich der Differenz der Winkelpositionswerte der Leseköpfe mit der bekannten Winkellage der Leseköpfe zueinander wird ein Winkelfehler bestimmt. Das Bestimmen der Winkelpositionswerte und des Winkelfehlers wird für eine Vielzahl von variierenden Winkelstellungen wiederholt. Eine mathematische Auswertemethode mit einem Bestimmen der Parameter einer die Winkelfehler quantifizierenden mathematischen Funktion wird durchgeführt und Kallbrierparameter werden als Parameter der quantifizierenden mathematischen Funktion oder als Korrektur- oder Codetabelle bestimmt.

DE 199 07 326 A1 beschreibt ein Winkelmesssystem zur Bestimmung der Wickelposition eines um eine Drehachse rotierenden Objektes, bestehend aus einer stationären Baueinheit und einer rotationssymmetrischen Messteilung, die mit dem rotierenden Objekt verbindbar ist. Mehrere Abtasteinheiten sind in einer definierten räumlichen Orientierung in der stationären Baueinheit angeordnet. Zur Abtastung der Messteilung an mehreren verschiedenen Messtellungsorten dienen winkelpositionsbhängige Teil-Abtastsignale. Das Winkelmesssystem umfasst Korrekturmittel, um aus den Teil-Abtastsignalen der Abtasteinheiten winkelabhängige Ausgangssignale des Winkelmesssystems zu erzeugen, die um eventuelle Fehler bereinigt sind, die durch eine gegebenenfalls vorliegende Nicht-Übereinstimmung der Drehachse des Objektes mit der Symmetrieachse der Messteilung resultieren.

EP 0 325 924 A1 beschreibt ein Rundheitsnormal zur Ermittlung der Lauffehler der Lagerungen von Rotoren. Das Rundheitsnormal besteht aus wenigstens einer Teilscheibe mit wenigstens einer Teilung, die konzentrisch am Rotor befestigt ist. Die Teilscheibe weist eine Winkelteilung auf, die von wenigstens zwei Abtasteinheiten abgetastet wird. Die Abtasteinheiten können sich diametral gegenüberliegen. Messwerte der Abtasteinheiten werden einem Subtrahierbaustein und einem Addierbaustein zugeführt. Bei einer fehlerfreien Winkelteilung und einer exakt zentrischen Lage der Winkelteilung bezüglich der Drehachse des Rotors liefern der erste Subtrahierbaustein den ersten Drehwinkelmesswert und der erste Addierbaustein den Rundlauffehler der Lagerung des Rotors in Richtung X.

Es ist eine Aufgabe der vorliegenden Erfindung, ein Verfahren zum Kalibrieren einer Messanordnung, ein Verfahren zum Betreiben einer Drehvorrichtung sowie eine Kalibrieranordnung und eine Drehvorrichtung der eingangs genannten Art anzugeben, wobei der Fehler der Messung der Drehposition des ersten und zweiten Teils der Drehvorrichtung relativ zueinander weiter verringert ist.

Die beigefügten Patentansprüche definieren den Schutzumfang.

Ein Grundgedanke der vorliegenden Erfindung besteht darin, dass die Drehvorrichtung keine ideale Drehbewegung um die Drehachse ausführt. Resultierende Fehler werden insbesondere als Taumelfehler, Planlauffehler und Rundlauffehler bezeichnet. Bei einem Taumelfehler ist eine Abweichung der Ausrichtung von drehbaren und/oder rotationssymmetrischen Teilen der Drehvorrichtung von der erwarteten oder erwünschten Drehachse eine mögliche Ursache. Ein Grund für einen Planlauffehler bildet z.B. ein scheibenförmiges Bauteil der Drehvorrichtung, das insbesondere die Markierungen für die Drehpositionsbestimmung aufweisen kann, und in einer Ebene senkrecht zur Drehachse idealerweise plan ausgeführt sein soll. In der Praxis jedoch bestehen Abweichungen von dem planen Verlauf. Bei der Drehbewegung um die Drehachse entsteht dann eine Auf- und Abwärtsbewegung, wenn die Richtung der Drehachse als Höhenrichtung bezeichnet wird. Ein Grund für einen Rundlauffehler stellt eine Abweichung der Drehlagerung zwischen einer exakt auf der Drehachse zentrierten Lagerung und einer seitlich davon liegenden Lagerung dar. Unter exakt auf der Drehachse liegend wird dabei verstanden, dass die Drehbewegung des jeweiligen Bauteils exakt um die Drehachse herum ausgeführt wird. Ein anderer möglicher Grund für einen Rundlauffehler ist eine nicht exakt rotationssymmetrische Form eines Bauteils, das um die Drehachse drehbar ist.

In allen diesen Fällen und auch in weiteren Fällen treten bei der Drehbewegung der Drehvorrichtung Bewegungskomponenten auf, die als Translation (also lineare geradlinige Bewegung) bezeichnet werden können. Es findet somit keine ideale Drehbewegung um die Drehachse der Drehvorrichtung statt, sondern es treten zumindest in Teilbereichen der Drehbewegung um die Drehachse herum auch Bewegungen quer zur Drehachse und/oder in Richtung der Drehachse (dies schließt Bewegungen parallel zur Drehachse ein) auf.

Der Lösungsansatz besteht nun darin, die von einer Mehrzahl von Sensoren, welche jeweils eine Drehposition des ersten und zweiten Teils der Drehvorrichtung relativ zueinander erfassen, gelieferten Informationen unter Berücksichtigung des Effekts von translatorischen Bewegungen auszuwerten und/oder zu verarbeiten. Dabei sind die verschiedenen Sensoren um die Drehachse herum verteilt. Darunter ist zu verstehen, dass sie gleichzeitig oder quasi-gleichzeitig Messsignale der Drehposition liefern, jedoch an verschiedenen Orten in Umfangsrichtung der Drehachse. Insbesondere können die Sensoren über den Umfang eines feststehenden Teils der Drehvorrichtung verteilt sein und dabei radial nach innen oder nach außen orientiert sein, um dort (innen oder außen) einen sich bei der Drehbewegung an ihnen vorbeidrehenden Messkörper zu erfassen. Der Messkörper kann wie oben beschrieben z.B. in Umfangsrichtung voneinander beabstandete Markierungen aufweisen und/oder ein Magnetfeld erzeugen. Die Mehrzahl der Sensoren kann jedoch auch in andere Richtungen als nach radial innen oder radial außen orientiert sein. Z.B. kann der Messkörper von oben oder von unten zu betrachtende Markierungen aufweisen und können die Sensoren daher in eine Richtung orientiert sein, die etwa parallel zur Drehachse verläuft. Es ist ferner möglich, dass die Sensoren nicht an einem feststehenden Teil der Drehvorrichtung, sondern an einem um die Drehachse drehbaren Teil der Drehvorrichtung angeordnet sind und dementsprechend der oder die Messkörper an einem feststehenden Teil der Drehvorrichtung angeordnet sind oder diesen Teil bilden. Auch Kombinationen der beiden genannten Prinzipien sind möglich, d.h. ein Teil der Sensoren ist an dem feststehenden Teil und ein Teil der Sensoren ist an dem drehbaren Teil der Drehvorrichtung angeordnet. Ferner soll darauf hingewiesen, dass es lediglich auf die relative Drehbarkeit des ersten und zweiten Teils der Drehvorrichtung um die Drehachse ankommt. Welcher Teil drehbar ist und welcher Teil feststeht, ist daher lediglich eine Frage der Betrachtung. Es kann jeweils ein Koordinatensystem definiert werden, das in dem ersten oder zweiten Teil ruht und aus dessen Sicht die Drehbewegung der Drehvorrichtung betrachtet wird.

Unter einer quasi-gleichzeitigen Erfassung wird verstanden, dass die Drehpositionen in derart kurzen zeitlichen Abständen nacheinander erfasst werden, dass dadurch kein erheblicher Fehler der gesamten Erfassung der Drehposition entsteht. Z.B. können die Messsignale der verschiedenen Sensoren zyklisch und einzeln nacheinander abgefragt werden. Wenn die Frequenz der zyklischen Abfrage groß genug ist, entsteht kein nennenswerter Fehler.

Bei der Auswertung und/oder Verarbeitung der von der Mehrzahl von Sensoren gelieferten Messsignale wird berücksichtigt, dass die Sensoren redundante Informationen über die Drehposition liefern, die während der Drehbewegung auftretenden translatorischen Bewegungen quer zur Drehachse aber von den Sensoren in unterschiedlicher Weise erfasst werden. Liegen z.B. zwei der Sensoren an bezüglich der Drehachse einander gegenüberliegenden Positionen, d.h. in Umfangsrichtung bei einem Winkelabstand von 180°, und tritt eine translatorische Bewegung in eine Richtung auf, die quer zur Verbindungslinie der beiden Sensoren verläuft, erfasst der eine Sensor diese Bewegung in einer Weise, die zu einem Messsignal führt, welches scheinbar auf eine Drehbewegung in einer Richtung um die Drehachse hindeutet. Dagegen erfasst der andere Sensor die Translationsbewegung in einer Weise, die scheinbar auf eine Drehbewegung um die Drehachse in die entgegengesetzte Richtung hinweist. Z.B. durch Summenbildung der entsprechenden Messwerte bzw. Messsignale der beiden Sensoren kann die Translationsbewegung aus der Gesamtheit der Messsignale eliminiert werden. Es ist aber auch möglich, die Translationsbewegung zu erfassen, indem z.B. die gleichzeitig stattfindende Drehbewegung aus den Messsignalen eliminiert wird oder aus den Messwerten eliminiert wird. Wenn nicht nur zwei Sensoren, sondern z.B. drei oder vier Sensoren vorhanden sind, die um die Drehachse herum verteilt sind, kann nicht nur eine Translationsbewegung in einer Richtung quer zur Drehachse erfasst und berücksichtigt werden, sondern können auch Translationsbewegungen in einer quer zu dieser ersten Richtung verlaufenden Richtung erfasst werden. Dabei verläuft diese zweite Richtung ebenfalls quer zur Drehachse. Insbesondere sind daher jegliche Arten von Rundlauffehlern erfassbar und können berücksichtigt werden. Wenn außerdem eine solche Anordnung mit einer Mehrzahl von Sensoren nicht nur an einer axialen Position der Drehachse um diese herum verteilt ist, sondern auch noch an einer anderen axialen Position der Drehachse, vorzugsweise in einem größeren Abstand zu der ersten axialen Position, ebenfalls eine solche Sensoranordnung vorhanden ist, können auch Taumelfehler erfasst und/oder berücksichtigt werden.

Vorzugsweise werden bei der Berücksichtigung der translatorischen Bewegungen dieselben Messsignale verarbeitet und/oder ausgewertet, die auch zur Bestimmung der Drehposition ausgewertet werden. Es handelt sich daher insbesondere nicht um zusätzliche Messsignale zur Bestimmung einer Referenz-Drehposition und/oder für andere Zwecke. Im Fall der erwähnten Markierungen, die um die Drehachse herum verteilt sind (z.B. Teilkreisscheibe mit strichförmigen Markierungen) wird aus denselben Signalen, mit denen die vorbeilaufenden Markierungen erfasst werden (z.B. Zählerstand der vorbeigelaufenen Markierungen oder Impulssignal für jede vorbeilaufende Markierung), die translatorische Bewegung erfasst, bestimmt und/oder eliminiert. Im Fall der oben erwähnten Magnetfeldsensoren findet aufgrund einer translatorischen Bewegung quer zur Drehachse eine Veränderung der Richtung des Magnetfeldes am Ort des jeweiligen Magnetfeldsensors statt. Die gemessene Richtung des Magnetfeldes kann daher ebenfalls zur Bestimmung und/oder Eliminierung der translatorischen Bewegung genutzt werden. Dabei lässt sich die translatorische Bewegung wie oben erwähnt nur mit Hilfe der Gesamtheit der Informationen von mehreren Sensoren ermitteln und/oder eliminieren.

Insbesondere wird ein Verfahren vorgeschlagen zum Kalibrieren einer Messanordnung zum Bestimmen von Drehpositionen einer Drehvorrichtung, die einen ersten Teil und einen relativ zu dem ersten Teil um eine Drehachse drehbaren zweiten Teil aufweist, wobei:

- Drehpositionen des ersten Teils relativ zu dem zweiten Teil und/oder Drehpositionen des zweiten Teils relativ zu dem ersten Teil mit einer Mehrzahl von Sensoren erfasst werden, die um die Drehachse herum verteilt angeordnet sind, und jeweils ein der erfassten Drehposition entsprechendes Messsignal erzeugt wird, sodass redundante Informationen über die Drehpositionen des ersten Teils und zweiten Teils relativ zueinander vorliegen,

- die redundanten Informationen über die Drehposition(en) derart ausgewertet werden, dass Effekte einer translatorischen Bewegung des ersten und des zweiten Teils relativ zueinander korrigiert werden, wobei die translatorische Bewegung quer zur Erstreckung der Drehachse verläuft.

Ferner wird eine Kalibrieranordnung vorgeschlagen zum Kalibrieren einer Messanordnung zum Bestimmen von Drehpositionen einer Drehvorrichtung, die einen ersten Teil und einen relativ zu dem ersten Teil um eine Drehachse drehbaren zweiten Teil aufweist, wobei die Kalibrieranordnung aufweist:

- eine Mehrzahl von Sensoren, die um die Drehachse herum verteilt angeordnet sind und die jeweils an einem der Teile angeordnet sind,

- zumindest einen Messkörper, der an dem anderen der Teile angeordnet ist und zumindest einem der Sensoren zugeordnet ist, wobei der Sensor ausgestaltet ist, ein Messsignal entsprechend einer Drehposition des Messkörpers und damit entsprechend der relativen Drehposition des ersten und zweiten Teils zu erzeugen,

- eine Auswertungseinrichtung, die mit den Sensoren zum Empfang von Messsignalen der Sensoren verbunden ist und die ausgestaltet ist, von den Sensoren erfasste Drehpositionen des ersten und zweiten Teils relativ zueinander derart auszuwerten, dass Effekte einer translatorischen Bewegung des ersten und des zweiten Teils relativ zueinander korrigiert werden, wobei die translatorische Bewegung quer zur Erstreckung der Drehachse verläuft.

Wie erwähnt können die Grundgedanken der vorliegenden Erfindung auch auf den Betrieb einer Drehvorrichtung, insbesondere als Teil eines Koordinatenmessgeräts, angewandt werden. In diesem Fall werden die translatorischen Bewegungen nicht bei der Kalibrierung berücksichtigt, sondern unmittelbar während des Betriebes der Drehvorrichtung.

Es wird daher auch ein Verfahren vorgeschlagen zum Betreiben einer Drehvorrichtung, insbesondere einer Drehvorrichtung als Bestandteil eines Koordinatenmessgeräts zur Messung von Koordinaten eines Werkstücks, wobei die Drehvorrichtung einen ersten Teil und einen relativ zu dem ersten Teil um eine Drehachse drehbaren zweiten Teil aufweist und wobei

- Drehpositionen des ersten Teils relativ zu dem zweiten Teil und/oder Drehpositionen des zweiten Teils relativ zu dem ersten Teil mit einer Mehrzahl von Sensoren erfasst werden, die um die Drehachse herum verteilt angeordnet sind, und jeweils ein der erfassten Drehposition entsprechendes Messsignal erzeugt wird, sodass redundante Informationen über die Drehpositionen des ersten Teils und zweiten Teils relativ zueinander vorliegen,

- die redundanten Informationen über die Drehposition(en) derart ausgewertet werden, dass Effekte einer translatorischen Bewegung des ersten und des zweiten Teils relativ zueinander korrigiert werden, wobei die translatorische Bewegung quer zur Erstreckung der Drehachse verläuft.

Dementsprechend wird außerdem eine Drehvorrichtung vorgeschlagen, insbesondere eine Drehvorrichtung als Bestandteil eines Koordinatenmessgeräts zur Messung von Koordinaten eines Werkstücks, wobei die Drehvorrichtung einen ersten Teil und einen relativ zu dem ersten Teil um eine Drehachse drehbaren zweiten Teil aufweist und wobei die Drehvorrichtung ferner aufweist:

- eine Mehrzahl von Sensoren, die um die Drehachse herum verteilt angeordnet sind und die jeweils an einem der Teile angeordnet sind,

- zumindest einen Messkörper, der an dem anderen der Teile angeordnet ist und zumindest einem der Sensoren zugeordnet ist, wobei der zugeordnete Sensor ausgestaltet ist, ein Messsignal entsprechend einer Drehposition des Messkörpers und damit entsprechend der relativen Drehposition des ersten und zweiten Teils zu erzeugen,

- eine Auswertungseinrichtung, die mit den Sensoren zum Empfang von Messsignalen der Sensoren verbunden ist und die ausgestaltet ist, von den Sensoren erfasste Drehpositionen des ersten und zweiten Teils relativ zueinander derart auszuwerten, dass Effekte einer translatorischen Bewegung des ersten und des zweiten Teils relativ zueinander korrigiert werden, wobei die translatorische Bewegung quer zur Erstreckung der Drehachse verläuft.

Die Auswertungseinrichtung kann insbesondere lediglich über Signalleitungen mit den Sensoren verbunden sein und muss in diesem Fall nicht mechanisch mit den Teilen der Drehvorrichtung verbunden sein, d.h. muss insbesondere nicht an den teilen befestigt sein. Es kann daher auch von einer Anordnung mit den drehbaren Teilen, den Sensoren und der Auswertungseinrichtung gesprochen werden.

Insbesondere weist das Koordinatenmessgerät die Drehvorrichtung und Sensoranordnung in einer beliebigen Ausgestaltung auf, die in dieser Beschreibung beschrieben ist und/oder dem Fachmann bekannt ist.

Insbesondere werden der erste Teil und der zweite Teil relativ zueinander durch eine Drehbewegung um eine Drehachse gedreht und wird dadurch eine Position und/oder Ausrichtung einer Koordinatenmesseinrichtung des Koordinatenmessgeräts eingestellt, wobei die redundanten Informationen aus Drehpositionen des ersten Teils und zweiten Teils relativ zueinander gewonnen werden, die unmittelbar vor, während und/oder unmittelbar nach der Drehbewegung von den Sensoren erfasst werden, wobei die Effekte der translatorischen Bewegung bei einer Bestimmung von Koordinaten eines Werkstücks, das mit der Koordinatenmesseinrichtung in der eingestellten Position und/oder Ausrichtung der Koordinatenmesseinrichtung vermessen wird, berücksichtigt werden.

Dem entspricht bezüglich des KMG Folgendes: Der erste Teil oder der zweite Teil der Drehvorrichtung ist mit einer Koordinatenmesseinrichtung zum Messen von Koordinaten des Werkstücks verbunden, sodass eine Position und/oder Ausrichtung der Koordinatenmesseinrichtung durch eine Drehbewegung des ersten Teils und zweiten Teils relativ zueinander einstellbar ist, wobei die Auswertungseinrichtung ausgestaltet ist, durch Auswertung der von den Sensoren erfassten Drehpositionen, die unmittelbar vor, während und/oder unmittelbar nach der Drehbewegung von den Sensoren erfasst wurden, die Effekte der translatorischen Bewegung des ersten und zweiten Teils relativ zueinander bei einer Bestimmung von Koordinaten des Werkstücks, das mit der Koordinatenmesseinrichtung in der eingestellten Position und/oder Ausrichtung der Koordinatenmesseinrichtung vermessen wird, zu berücksichtigen.

Drehpositionen, die unmittelbar vor, während und/oder unmittelbar nach der Drehbewegung von den Sensoren erfasst wurden, betreffen den laufenden, bestimmungsgemäßen Betrieb der Drehvorrichtung, insbesondere des Koordinatenmessgeräts, und daher nicht die Kalibrierung der Sensoren. Insbesondere findet kein Vergleich der so erhaltenen Werte der Drehpositionen mit zusätzlichen Messwerten eines zusätzlichen Messsystems statt, wie es bei einer Variante der Kalibrierung der Fall ist. Dies schließt jedoch den Fall mit ein, dass während des Betriebs der Drehvorrichtung nicht immer Messwerte aller Sensoren bei der Berücksichtigung der Effekte der translatorischen Bewegung erfasst und/oder ausgewertet werden.

Es ist ein Vorteil der Erfassung der Drehpositionen während des laufenden Betriebes der Drehvorrichtung, dass die tatsächlich vorkommenden Betriebsbedingungen der Drehvorrichtung, insbesondere des KMG, berücksichtigt werden. "Laufender Betrieb" bedeutet nicht zwangsläufig, dass die Drehpositionen während der Drehbewegung erfasst werden.

Z.B. kann die Drehvorrichtung unter einer mechanischen Last stehen, die zu einer translatorischen Bewegung des ersten und des zweiten Teils relativ zueinander quer zur Drehachse führt oder eine solche translatorische Bewegung verändert im Vergleich zu dem unbelasteten Zustand. Bei einer Kalibrierung ohne Last kann ein solcher Effekt nur durch ungefähre Nachbildung der Belastung oder durch Modellrechnung berücksichtigt werden.

Zur Berücksichtigung der translatorischen Bewegung während des laufenden Betriebes der Drehvorrichtung werden vorzugsweise mindestens drei Sensoren verwendet, die jeweils die Drehposition erfassen. Wie in dieser Beschreibung unter Bezugnahme auf die Kalibrierung beschrieben wird, können die Sensoren ungleichmäßig um die Drehachse der Drehvorrichtung verteilt sein. Um während des Betriebes der Drehvorrichutng aus der Mehrzahl von Drehwinkelsensoren die Information zur Berücksichtigung der translatorischen Bewegung quer zur Drehachse gewinnen zu können, wird insbesondere die Information darüber verwendet, welche Drehposition jeweils dem Messsignal des Drehwinkelsensors entspricht. Aufgrund des so genannten Teilungsfehlers kann jedenfalls aus den Messsignalen eines einzelnen Drehwinkelsensors die Drehposition in vielen Fällen nicht oder nicht genau bestimmt werden, wenn diese Zuordnung zwischen den Messsignalen des Drehwinkelsensors und der Drehposition nicht bekannt ist. Unter dem Begriff Teilungsfehler können sämtliche Fehler des Messsystems, insbesondere systematische Erfassungsfehler des Sensors und Fehler des Messkörpers, zusammengefasst werden. Der Begriff Teilungsfehler bezieht sich ursprünglich auf die durch eine Mehrzahl von um die Drehachse herum verteilten Markierungen bewirkte Teilung. Der Begriff Teilungsfehler kann jedoch z. B. auch auf die beschriebenen Messsysteme mit einem Magnetfeld des Messkörpers und Magnetfeldsensoren bezogen werden. Bereits aufgrund des Teilungsfehlers ist eine Kalibrierung erforderlich. Eine Ausnahme bildet dabei eine Anordnung von Drehwinkelsensoren, die paarweise einander bezüglich der Drehachse gegenüberliegende Sensoren aufweisen. Diese Sensorpaare messen unmittelbar den Fehler aufgrund der Translation bzw. die translatorische Bewegung. Wenn diese Sensoren allerdings zur Bestimmung der Drehwinkel genutzt werden sollen, ist wiederum eine Kalibrierung auch bezüglich des Teilungsfehlers erforderlich oder wird bevorzugt.

Um die translatorische Bewegung der beiden Teile der Drehvorrichtung relativ zueinander quer zur Drehachse erfassen und/oder berücksichtigen zu können, kann die Kalibrierung bezüglich des Teilungsfehlers entweder vor dem laufenden Betrieb oder während des laufenden Betriebes vorgenommen werden. Unter einer Kalibrierung während des laufenden Betriebes wird insbesondere verstanden, dass die Drehvorrichtung auch während der Kalibrierung in einem Betriebszustand ist, in dem sie für den bestimmungsgemäßen Zweck eingesetzt werden kann, ohne Bauteile von der Drehvorrichtung abzukoppeln, Bauteile an die Drehvorrichtung anzukoppeln oder die Bewegungsmöglichkeiten der Drehvorrichtung zu verändern. Unter derartigen Bauteilen werden insbesondere auch zusätzliche Messsysteme verstanden, die speziell zur Kalibrierung verwendet werden. Insbesondere ist die Drehvorrichtung in einem Betriebszustand, in dem sie für den bestimmungsgemäßen Zweck verwendet werden kann, wenn sie einsatzbereit Teil eines Koordinatenmessgeräts ist.

Wenn die Kalibrierung während des laufenden Betriebs der Drehvorrichtung durchgeführt wird, kann eine Drehbewegung der beiden relativ zueinander drehbeweglichen Teile der Drehvorrichtung ausgeführt werden, um die Zuordnung der Messsignale der einzelnen Drehwinkelsensoren zu der tatsächlichen Drehposition zu ermitteln. Insbesondere kann eine vollständige Umdrehung der Teile bezüglich der Drehachse ausgeführt werden. Da sich der Teilungsfehler, der auf den Messkörper zurückzuführen ist, in gleicher Weise, jedoch entsprechend den Winkelabständen der Sensoren zueinander, auf die einzelnen Sensoren auswirkt, kann zumindest der auf den Messkörper zurückzuführende Anteil des Teilungsfehlers auf diese Weise eliminiert werden und/oder bestimmt werden. Aber auch Abweichungen bei der Messsignalerzeugung der verschiedenen Sensoren voneinander können durch eine vollständige Umdrehung oder nahezu vollständige Umdrehung eliminiert und/oder ermittelt werden. Ferner ist es möglich, z.B. das Auswertungsverfahren aus der Veröffentlichung von Geckeler oder die in dieser Beschreibung beschriebenen Modifikationen davon auch während des laufenden Betriebes der Drehvorrichtung auszuführen, d.h. jedenfalls die während des laufenden Betriebes der Drehvorrichtung aufgenommenen Messsignale in dieser Weise auszuwerten.

Unter Berücksichtigung der Ergebnisse der Kalibrierung kann dann während des laufenden Betriebes die translatorische Bewegung erfasst und berücksichtigt werden.

Bei einer Variante weist die Drehvorrichtung nicht zwangsläufig mehr als einen Sensor zur Erfassung der Drehposition (im Folgenden auch kurz: Drehpositionssensor) auf. Bei dieser Variante ist ein zusätzliches Messsystem vorgesehen, um die translatorische Bewegung des ersten und des zweiten Teils relativ zueinander quer zur Drehachse zu erfassen. Im Unterschied zu der Veröffentlichung von Geckeler werden von dem zusätzlichen Messsystem gelieferte Messsignale jedoch während des bestimmungsgemäßen Betriebes der Drehvorrichtung erzeugt und ausgewertet. Die darin enthaltene Information über die translatorische Bewegung der beiden relativ zueinander beweglichen Teile der Drehvorrichtung wird dazu genutzt, Messsignale und/oder daraus abgeleitete Messwerte des zumindest einen Drehpositionssensors bezüglich der translatorischen Bewegung zu korrigieren.

Insbesondere wird vorgeschlagen: Ein Verfahren zum Betreiben einer Drehvorrichtung, insbesondere einer Drehvorrichtung als Bestandteil eines Koordinatenmessgeräts zur Messung von Koordinaten eines Werkstücks, wobei die Drehvorrichtung einen ersten Teil und einen relativ zu dem ersten Teil um eine Drehachse drehbaren zweiten Teil aufweist und wobei

- Drehpositionen des ersten Teils relativ zu dem zweiten Teil und/oder Drehpositionen des zweiten Teils relativ zu dem ersten Teil mit zumindest einem Sensor erfasst werden und den erfassten Drehpositionen entsprechende Messsignale erzeugt werden,

- Informationen von einem zusätzlichen Messsystem über eine translatorische Bewegung des ersten und des zweiten Teils relativ zueinander erfasst werden, wobei die translatorische Bewegung quer zur Erstreckung der Drehachse verläuft,

- die Informationen von dem zusätzlichen Messsystem derart ausgewertet werden, dass Effekte der translatorischen Bewegung des ersten und des zweiten Teils auf die Messsignale und/oder auf daraus gewonnene Messwerte der Drehpositionen korrigiert werden.

Die Formulierung "Informationen von einem zusätzlichen Messsystem über eine translatorische Bewegung" schließt nicht aus, dass das zusätzliche Messsystem auch Informationen über die Drehbewegung der Teile der Drehvorrichtung liefert.

Ferner wird eine Drehvorrichtung vorgeschlagen, insbesondere eine Drehvorrichtung als Bestandteil eines Koordinatenmessgeräts zur Messung von Koordinaten eines Werkstücks, wobei die Drehvorrichtung einen ersten Teil und einen relativ zu dem ersten Teil um eine Drehachse drehbaren zweiten Teil aufweist und wobei

- zumindest ein Sensor vorgesehen ist, der ausgestaltet ist, Drehpositionen des ersten Teils relativ zu dem zweiten Teil und/oder Drehpositionen des zweiten Teils relativ zu dem ersten Teil zu erfassen und den erfassten Drehpositionen entsprechende Messsignale zu erzeugen,

- ein zusätzliches Messsystem mit zumindest einem weiteren Sensor vorgesehen ist, das ausgestaltet ist, Informationen über eine translatorische Bewegung des ersten und des zweiten Teils relativ zueinander zu erfassen, wobei die translatorische Bewegung quer zur Erstreckung der Drehachse verläuft,

- eine Auswertungseinrichtung vorgesehen ist, die mit den Sensoren zum Empfang von Messsignalen der Sensoren verbunden ist und die ausgestaltet ist, die Informationen von dem zusätzlichen Messsystem derart auszuwerten, dass Effekte der translatorischen Bewegung des ersten und des zweiten Teils auf die Messsignale und/oder auf daraus gewonnene Messwerte der Drehpositionen korrigiert werden.

Die Drehvorrichtung weist die zwei relativ zueinander um eine Drehachse drehbaren Teile auf, den ersten und den zweiten Teil. Unter der Formulierung "der zweite Teil wird relativ zu dem ersten Teil um die Drehachse gedreht" ist auch zu verstehen, dass der zweite Teil relativ zu einem externen Koordinatensystem ruht und der erste Teil gedreht wird. In Relation der Teile zueinander findet in diesem Fall dennoch eine Drehbewegung des zweiten Teils relativ zu dem ersten Teil statt. Insbesondere ist einer der Teile ausgestaltet, entweder ein Werkstück oder eine Koordinatenmesseinrichtung, z. B. einen Taster, zu halten, um eine Drehung des Werkstücks oder der Koordinatenmesseinrichtung zu ermöglichen. Optional bietet die Drehvorrichtung eine zusätzliche Drehbeweglichkeit um eine zweite Drehachse (z. B. so genanntes Dreh-/Schwenkgelenk mit zwei zueinander senkrecht verlaufenden Drehachsen) oder um mehr als zwei Drehachsen.

Bei einer ersten Ausführungsform ist der eine Teil der Drehvorrichtung ausgestaltet, das Werkstück zu halten. Der andere Teil ist insbesondere ausgestaltet, an einer Basis der Anordnung befestigt zu werden und/oder auf einer Basis positioniert zu werden, so dass dieser Teil relativ zu der Basis unbeweglich ist und das Werkstück mit dem einen Teil relativ zu der Basis gedreht werden kann. Z.B. kann es sich bei der Drehvorrichtung um einen so genannten Drehtisch handeln, auf oder an dem das Werkstück angeordnet wird, um in verschiedene Drehstellungen gebracht werden zu können und in den verschiedenen Drehstellungen seine Koordinaten zu messen.

Gemäß einer zweiten Ausführungsform ist der eine Teil ausgestaltet, eine Koordinatenmesseinrichtung zu halten. In diesem Fall ermöglicht die Drehvorrichtung eine Drehung der Koordinatenmesseinrichtung, z. B. relativ zu einem Arm (insbesondere einer Pinole) eines Koordinatenmessgeräts. Bekannt sind z.B. so genannte Dreh-/Schwenkgelenke, die eine Drehbeweglichkeit bezüglich zweier quer und insbesondere senkrecht zueinander verlaufender Drehachsen ermöglichen.

Das Erfassen von Drehpositionen des ersten Teils relativ zu dem zweiten Teil durch eine Mehrzahl von Sensoren bedeutet, dass jeder der Sensoren zumindest eine Drehposition erfasst und ein entsprechendes Messsignal erzeugt. Insbesondere erfasst jeder der Sensoren bei jeder der Drehstellungen des ersten Teils relativ zu dem zweiten Teil die Drehposition.

Gemäß Anspruch 11 weist die Drehvorrichtung. zumindest einen Messkörper auf, der mit dem jeweiligen Sensor zusammenwirkt. Der Messkörper ist an dem ersten Teil angeordnet oder bildet den ersten Teil und der Sensor ist an dem zweiten Teil angeordnet oder umgekehrt. Auf Beispiele wurde bereits eingangs eingegangen. Es können auch mehrere Messkörper vorhanden sein, die jeweils mit einem oder mehreren Sensoren zusammenwirken. Insbesondere kann der Messkörper ein erster Messkörper sein, der an einer ersten axialen Position der Drehachse angeordnet ist. wobei an dem ersten oder zweiten Teil an einer zweiten, von der ersten axialen Position der Drehachse beabstandeten axialen Position ein zweiter Messkörper angeordnet ist. An beiden axialen Positionen ist außerdem eine Anordnung mit einer Mehrzahl von Sensoren vorgesehen, die jeweils ausgestaltet sind, eine Drehposition des ersten und des zweiten Teils relativ zueinander zu erfassen. Die Messung an verschiedenen axialen Positionen bezüglich der Drehachse erlaubt es, Taumelfehler aufgrund einer Abweichung der Ausrichtung von drehbaren und/oder rotationssymmetrischen Teilen der Drehvorrichtung von der erwarteten oder erwünschten Drehachse zu messen.

Unter einer Drehposition wird eine Position des ersten und zweiten Teils relativ zueinander verstanden, die durch Drehung um die Drehachse einstellbar ist. Insbesondere können je nach Bauart der Drehvorrichtung lediglich bestimmte, diskrete Drehpositionen einstellbar sein oder - zumindest innerhalb eines kontinuierlichen Bereichs - beliebige Drehpositionen. Wenn eine Referenz-Drehposition festgelegt oder bestimmbar ist, entspricht jeder Drehposition eine Drehbewegung um einen bezüglich der Drehachse definierten Drehwinkel (d.h. der Drehwinkel ist ein Azimutwinkel der Drehachse), um den die Teile relativ zueinander aus der Referenz-Drehposition gedreht werden können, sodass sie auf diese Weise in die Drehposition gelangen. Dabei muss die Drehvorrichtung diese Drehbewegung nicht oder nicht in allen Betriebszuständen ermöglichen. Vielmehr kann die Drehbewegung auch eine gedachte Drehbewegung sein.

Wie erwähnt, sind die mehreren Sensoren um die Drehachse der Drehvorrichtung herum verteilt angeordnet. Wie ebenfalls oben bereits ausführlicher beschrieben ist darunter zu verstehen, dass die Drehpositionen gleichzeitig oder quasi-gleichzeitig an verschiedenen Winkelpositionen gemessen werden bzw. dass die Anordnung der Sensoren und des zumindest einen zugeordneten Messkörpers entsprechend ausgestaltet ist.

Unter Effekten der translatorischen Bewegung werden insbesondere die oben genannten Auswirkungen auf die Messsignale und daraus abgeleiteten Messwerte der Sensoren verstanden, nämlich dass ein Messsignal scheinbar auf eine Drehbewegung hindeutet, jedoch durch eine translatorische Bewegung verursacht wurde. Umgekehrt können sich auch Drehbewegung und translatorische Bewegung kompensieren, so dass der Sensor keine oder eine veränderte Bewegung erfasst. Darauf wird im Folgenden noch näher eingegangen.

Unter der oben genannten Korrektur wird insbesondere ein Eliminieren der Effekte der translatorischen Bewegung des ersten und des zweiten Teils relativ zueinander aus den Messsignalen, aus den redundanten Informationen und/oder aus den daraus erhaltenen Messwerten verstanden. Z.B. kann ein Messsignal eines oder können Messwerte mehrerer Sensoren korrigiert werden, insbesondere ein Zählwert, der einer Winkelposition entspricht, erhöht oder erniedrigt werden. Alternativ kann ein aus dem Messsignal erhaltener Messwert korrigiert werden, z. B. erhöht oder erniedrigt werden, um ihn zu korrigieren.

Insbesondere beim Betrieb eines KMG besteht eine weitere Möglichkeit der Korrektur darin, Messwerte bei der Vermessung eines Werkstücks mit einer Koordinatenmesseinrichtung des KMG unter Berücksichtigung der redundanten Informationen zu bestimmen. Die redundanten Informationen enthalten wie bereits beschrieben auch Informationen über die translatorische Bewegung quer zur Drehachse der Drehvorrichtung. Wenn die Koordinatenmesseinrichtung an die Drehvorrichtung angekoppelt ist und daher die Position und/oder Ausrichtung der Koordinatenmesseinrichtung von der Drehposition der Drehvorrichtung abhängt und ferner auch von der translatorischen Bewegung der Teile der Drehvorrichtung abhängt, kann die Gesamtinformation genutzt werden. Diese Gesamtinformation ist in der so genannten redundanten Information enthalten. Die Gesamtinformation kann dann insbesondere für die exakte Bestimmung der Position und/oder Ausrichtung der Koordinatenmesseinrichtung genutzt werden.

Insbesondere ist es auch möglich, die Verschiebung aufgrund der translatorischen Bewegung explizit zu bestimmen und für die Bestimmung der Position und/oder Ausrichtung der Koordinatenmesseinrichtung zu berücksichtigen. Eine Besonderheit der Erfindung liegt dabei darin, dass Messwerte von einer Mehrzahl von Drehpositionssensoren der Drehvorrichtung genutzt werden.

Allgemeiner formuliert entspricht es daher einer bevorzugten Ausführungsform der Erfindung, Messsignale und/oder daraus abgeleitete Messwerte einer Mehrzahl von Drehpositionssensoren einer Drehvorrichtung zur Bestimmung der translatorischen Position in einer Richtung quer zur Drehachse der Drehvorrichtung zu nutzen und ferner zur Bestimmung der Position und/oder Ausrichtung einer Koordinatenmesseinrichtung des KMG zu nutzen.

Bei der oben erwähnten Variante, bei der lediglich zumindest ein Drehpositionssensor vorhanden sein muss, jedoch ein zusätzliches Messsystem zur Erfassung der translatorischen Bewegung und/oder Position des ersten und des zweiten Teils der Drehvorrichtung vorhanden ist, kann insbesondere der oben beschriebene Fehler bei der Erfassung der Drehbewegung durch den Drehpositionssensor unter Verwendung der Information aus dem zusätzlichen Messsystem korrigiert werden. Z.B. in dem oben genannten Fall, in dem die translatorische Bewegung scheinbar eine Drehbewegung ist oder diese verstärkt, der von der translatorischen Bewegung erzeugte Effekt auf die Messsignale und/oder daraus abgeleiteten Messwerte eliminiert werden. In dem Fall, dass sich eine Drehbewegung und eine translatorische Bewegung zumindest teilweise kompensieren, kann das Messsignal des Drehpositionssensors oder der daraus abgeleitete Messwert so korrigiert werden, dass er die tatsächlich stattfindende oder ausgeführte Drehbewegung wiedergibt. Unter einer Korrektur der Drehbewegung wird auch verstanden, dass eine Drehposition, die durch eine Drehbewegung erreicht wurde oder die durch eine translatorische Bewegung erreicht wurde, korrigiert wird.

Bei der Koordinatenmesseinrichtung handelt es sich wie oben erwähnt z.B. um einen Taster zum mechanischen Antasten der Oberfläche eines Werkstücks oder um einen optischen Taster. In an sich bekannter Weise kann ferner aus der Position und/oder Ausrichtung der Koordinatenmesseinrichtung zumindest eine Koordinate des mit der Koordinatenmesseinrichtung vermessenen Werkstücks ermittelt werden.

Bei der Kalibrierung kann insbesondere zumindest ein Teil des Messsystems kalibriert werden, indem aus den redundanten Informationen Kalibrierinformationen gewonnen werden, die es erlauben, aus den Messsignalen des jeweiligen Sensors tatsächliche Drehpositionen des ersten Teils und zweiten Teils relativ zueinander zu ermitteln, die nicht von translatorischen Bewegungen des ersten und des zweiten Teils relativ zueinander abhängen, welche reproduzierbar während Drehbewegungen des ersten und des zweiten Teils relativ zueinander auftreten. Die Kalibriereinrichtung kann entsprechend ausgestaltet sein.

Optional können Anteile der Messsignale und/oder der Messwerte ermittelt werden, die (wenn ein einzelner Sensor betrachtet wird) scheinbar auf eine Drehbewegung zurückzuführen sind, aber allein Effekte der translatorischen Bewegung des ersten und des zweiten Teils relativ zueinander sind. Umgekehrt kann es auch sein, dass Anteile der Messsignale und/oder der Messwerte fehlen, d.h. nicht von dem jeweiligen Sensor erfasst wurden, weil eine translatorische Bewegung und eine Drehbewegung sich zumindest teilweise aus Sicht des Sensors kompensiert haben. Auch diese Anteile können explizit ermittelt werden. Es wird daher vorgeschlagen, dass beim Auswerten Anteile der Messsignale und/oder der Messwerte ermittelt werden, die, wenn ein einzelner Sensor betrachtet wird,

- scheinbar auf eine Drehbewegung des ersten Teils relativ zu dem zweiten Teil zurückzuführen sind, aber allein auf eine translatorische Bewegung des ersten und des zweiten Teils relativ zueinander zurückzuführen sind und/oder

- nicht von dem jeweiligen Sensor erfasst wurden, weil sich eine translatorische Bewegung und eine Drehbewegung aus Sicht des Sensors zumindest teilweise kompensiert haben.

Die Effekte der Anteile können dann aus den Messsignalen, aus den redundanten Informationen und/oder aus den Messwerten eliminiert werden.

Es ist jedoch nicht zwingend erforderlich, die Effekte der genannten Anteile explizit zu ermitteln, wenn die Korrektur durchgeführt werden soll. Bei einer Ausführungsform der Korrektur werden Differenzen oder Summen der Messsignale, der redundanten Informationen und/oder von Messwerten, die aus den Messsignalen und/oder den redundanten Informationen gewonnen werden, gebildet, sodass durch die Differenzbildung oder Summenbildung Effekte der translatorischen Bewegung des ersten und des zweiten Teils relativ zueinander aus den Messsignalen, aus den redundanten Informationen und/oder aus Messwerten, die aus den Messsignalen und/oder den redundanten Informationen gewonnen werden, ganz oder teilweise (je nach Richtung der translatorischen Bewegung) eliminiert werden. Eine Differenzbildung oder Summenbildung ist eine einfache und präzise Maßnahme, um die Korrektur durchzuführen.

Die Erfindung hat in allen Fällen, in denen der Effekt von translatorischen Bewegungen des ersten und zweiten Teils relativ zueinander berücksichtigt wird, den Vorteil, dass die Genauigkeit der Messung der Drehposition des ersten und zweiten Teils relativ zueinander verbessert werden kann. Insbesondere kann z.B. bei der Kalibrierung die Genauigkeit im Vergleich zu dem Verfahren verbessert werden, das in der oben genannten Veröffentlichung von Geckeler beschrieben ist.

Insbesondere wird es bevorzugt, dass paarweise Differenzen oder Summen der Messsignale und/oder der daraus erhaltenen Messwerte von mehreren verschiedenen Sensoren (vorzugsweise zumindest drei um die Drehachse verteilten Sensoren) gebildet werden und dadurch sowie optional durch weitere Verfahrensschritte (wie z. B. eine Lösung eines entsprechenden Gleichungssystems oder eine Optimierungsrechnung) die genannten Anteile ganz eliminiert werden und/oder die entsprechenden Effekte aus den redundanten Informationen ganz eliminiert werden. Allgemeiner formuliert wird vorgeschlagen, dass jeweils für Paare von Sensoren Differenzen oder Summen der Messsignale, von den Sensoren entsprechenden Teilen der redundanten Informationen und/oder der Messwerte gebildet werden und dadurch die Effekte der translatorischen Bewegung ganz oder teilweise eliminiert werden. Wenn alle möglichen Differenzen für zumindest drei um die Drehachse verteilte Sensoren gebildet werden, lassen sich die Effekte der translatorischen Bewegung ganz (d.h. vollständig) eliminieren. Im Fall von zumindest zwei Paaren von bezüglich der Drehachse einander gegenüberliegenden Sensoren kann durch Summenbildung der Messsignale bzw. Messwerte der einander gegenüberliegenden Sensoren der Effekt der Translationsbewegung unmittelbar eliminiert werden. Auf Beispiele für beide genannten Fälle wird noch eingegangen.

Gemäß einer ersten Ausführungsform des erfindungsgemäßen Verfahrens bei wird der Kalibrierung einer Messeinrichtung oder beim Betrieb eines KMG ein Translationsvektor bestimmt, der senkrecht zur Drehachse verläuft und einen Punkt auf der Drehachse mit einem Mittelpunkt eines Messkörpers oder der Anordnung von Sensoren verbindet, die mit dem Messkörper zum Zweck der Drehpositionsbestimmung zusammenwirken. Anders ausgedrückt beschreibt der Translationsvektor die Richtung und den Betrag des Weges der Relativbewegung des ersten und zweiten Teils quer zur Drehachse aus einer idealen Position. Diese ideale Position würde im Fall einer idealen Drehvorrichtung nicht verlassen, d.h. während der Drehbewegung würde keine translatorische Bewegung quer zur Drehachse ausgeführt. Bei dem Mittelpunkt des Messkörpers handelt es sich z.B. um den Mittelpunkt der Markierungen einer Teilkreisscheibe. Alternativ kann es sich um den Mittelpunkt des von dem Messkörper erzeugten Gesamt-Magnetfelds handeln. Bei dem Mittelpunkt der Anordnung von Sensoren handelt es sich insbesondere um einen Punkt, auf den alle Sensoren ausgerichtet sind. Im Idealfall der Drehvorrichtung fällt dieser Punkt mit einem Punkt auf der Drehachse zusammen. Insbesondere können der Betrag und die Richtung des Translationsvektors aus den redundanten Informationen bestimmt werden.

Gemäß einem ersten Ausführungsbeispiel wird die aufgrund der translatorischen Bewegung ausgeführte Verschiebung aus der Idealposition bei der Kalibrierung der Messeinrichtung bestimmt. Eine Auswertungseinrichtung der Kalibrieranordnung kann entsprechend ausgestaltet sein. Dabei werden wie oben beschrieben Differenzen der von den einzelnen Drehpositionssensoren erfassten Drehpositionen gebildet, und zwar entweder jeweils paarweise für zwei der Drehpositionssensoren und/oder jeweils für die Drehpositionssensoren und eine Referenz-Drehposition. Allgemeiner formuliert wird die gesamte redundante Information aus der Erfassung der Drehpositionen mit mehreren Drehpositionssensoren in einem ersten Schritt vorverarbeitet. In einem nächsten Schritt wird eine Fourier-Transformation ausgeführt, beispielsweise wie in der oben genannten Veröffentlichung von Geckeler beschrieben. Nach Ausführung optionaler weiterer Verarbeitungsschritte (z.B. der Anwendung einer Transferfunktion und/oder von Gewichten, wie beispielsweise ebenfalls in Geckeler beschrieben) wird im Frequenzraum eine Fehlerseparation bzw. Separation der Informationen bezüglich der Drehposition und der translatorischen Position in einer Richtung quer zur Drehachse vorgenommen. Nach der Separation kann durch eine Rücktransformation in den Ortsraum der Anteil der Drehposition und/oder der Anteil der translatorischen Position erhalten werden. Die translatorische Position kann insbesondere wie oben beschrieben durch den Translationsvektor ausgedrückt werden. Die rotatorische Position wird z.B. in Bezug auf eine Referenzposition (so genannte Null-Grad-Position) ausgedrückt werden.

Bei einer Variante des Auswertungsverfahrens wird zunächst ebenfalls die redundante Information vorverarbeitet, z.B. wie oben beschrieben. Auch eine Fourier-Transformation kann als folgender Verfahrensschritt ausgeführt werden. Dies ist jedoch nicht zwingend erforderlich. In jedem Fall wird ein Modell der translatorischen Bewegung oder der durch die translatorische Bewegung erzielten Verschiebung quer zur Drehachse verwendet. Eine entsprechende Gleichung wird noch in der Figurenbeschreibung für ein konkretes Ausführungsbeispiel angegeben. Insbesondere können der Betrag und die Richtung des Translationsvektors Parameter des Modells sein. Das Modell der translatorischen Bewegung oder Verschiebung wird mit den Informationen über die Drehpositionen kombiniert, die von der Mehrzahl der Drehpositionssensoren erfasst wurde. Nun wird unter Anwendung eines vorgegebenen Optimierungsalgorithmus die beste Lösung des Modells der Translation gefunden, d.h. es werden die Parameterwerte optimiert, von denen das Modell abhängt. Insbesondere kann bei der Optimierung iterativ vorgegangen werden, wobei in jedem Iterationsschritt Parameterwerte festgelegt sind und gemäß dem Optimierungsalgorithmus für den jeweils nächsten Iterationsschritt neue Parameterwerte gefunden werden.

Die Erfindung ermöglicht es insbesondere, Fehler des Messsystems zur Bestimmung der Drehposition von mechanischen Fehlern der Drehvorrichtung zu trennen. Oben wurden außer den Fehlern aufgrund einer translatorischen Bewegung quer zur Drehachse auch Fehler aufgrund einer translatorischen Bewegung in Richtung oder parallel zu der Drehachse erwähnt. Zur Bestimmung dieses translatorischen Fehlers kann z.B. zumindest ein weiterer Sensor eingesetzt werden, z.B. ein induktiver oder kapazitiver Sensor, der einen Abstand zwischen dem ersten Teil und dem zweiten Teil in Richtung der Drehachse misst. Die Bestimmung der Translationsfehler ermöglicht es daher insbesondere, die Fehler des Messsystems zu bestimmen und optional dauerhaft zu korrigieren.

Ausführungsbeispiele der Erfindung werden nun in Bezugnahme auf die beigefügte Zeichnung beschrieben. Die einzelnen Figuren der Zeichnung zeigen:

Fig. 1    schematisch ein Koordinatenmessgerät in Portalbauweise, an das ein Tastkopf über eine Drehvorrichtung ankoppelbar ist,

Fig. 2  das freie Ende eines Armes eines Koordinatenmessgeräts mit einem über eine Drehvorrichtung mit zwei rotatorischen Freiheitsgraden der Bewegung angekoppelten Tastkopf,

Fig. 3  eine schematische Draufsicht auf einen Messkörper mit einer Vielzahl von strichförmigen Markierungen, die um eine Drehachse herum verteilt sind, und mit fünf Sensoren zum Erfassen der Markierungen, die bei einer Drehbewegung des Messkörpers relativ zu den Sensoren durch den Erfassungsbereich der Sensoren hindurchtreten,

Fig. 4  eine schematische Darstellung einer translatorischen Verschiebung eines Messkörpers ähnlich dem in Fig. 3,

Fig. 5  eine Detaildarstellung eines Messkörpers mit einer Vielzahl von Markierungen zur Erläuterung des Effektes einer translatorischen Verschiebung quer zur Drehachse auf die Messsignale von Drehpositionssensoren,

Fig. 6  eine schematische Darstellung eines Messkörpers mit einer Vielzahl von Markierungen, wobei Bezeichnungen von physikalischen Größen und ein Koordinatensystem erläutert werden, die bei der Berücksichtigung der translatorischen Bewegung verwendet werden,

Fig. 7  ein Diagramm, das den Verlauf einer translatorischen Bewegung eines Teils einer Drehvorrichtung quer zur Drehachse für einen Umlauf um die Drehachse beschreibt,

Fig. 8  ein Diagramm, das den Verlauf einer translatorischen Bewegung wie in Fig. 7 beschreibt, jedoch für eine Bewegungsrichtung, die quer zur Drehachse und ebenfalls quer zu der translatorischen Bewegungsrichtung aus Fig. 7 verläuft,

Fig. 9  eine schematische Darstellung einer Drehvorrichtung mit einem Messsystem zur Bestimmung von mechanischen Fehlern der Drehvorrichtung, d.h. zur Bestimmung von Abweichungen der Drehbewegung von einer idealen Drehbewegung um eine Drehachse,

Fig. 9a  Eine weitere schematische Darstellung einer Drehvorrichtung ähnlich der in Fig. 9, wobei außer einer Variante des Messsystems aus Fig. 9 auch ein Messsystem mit einem Sensor zur Messung der Drehposition der relativ zueinander beweglichen Teile vorgesehen ist;

Fig. 10  eine Anordnung ähnlich wie in Fig. 3, wobei jedoch jeweils zwei Sensoren einander bezüglich der Drehachse gegenüberliegend angeordnet sind und wobei zwei solche Paare von einander gegenüberliegend angeordneten Sensoren bei 90°-Winkelabstand relativ zueinander um die Drehachse beabstandet angeordnet sind,

Fig. 11  eine schematische Darstellung einer Drehvorrichtung in Form eines axialen Längsschnitts, wobei die Drehvorrichtung Sensoren zur Bestimmung der Drehposition an verschiedenen axialen Positionen der Drehachse aufweist,

Fig. 12  eine schematische Darstellung ähnlich der in Fig. 11, wobei jedoch lediglich an einer axialen Position der Drehachse ein scheibenförmiger Messkörper angeordnet ist, der einer Mehrzahl von Sensoren zur Bestimmung der Drehposition zugeordnet ist,

Fig. 13  eine schematische Darstellung einer weiteren Variante einer Drehvorrichtung, wobei an einer zweiten axialen Position der Drehachse ein Messkörper für ein andersartiges Messsystem angeordnet ist,

Fig. 14  noch eine weitere schematische Darstellung einer Drehvorrichtung ähnlich der in Fig. 11 bis Fig. 13, wobei jedoch der scheibenförmige Messkörper nicht nur von einer Mehrzahl von Sensoren zur Bestimmung der Drehposition genutzt wird, sondern auch von weiteren Sensoren zur Bestimmung der axialen Position in Richtung der Drehachse,

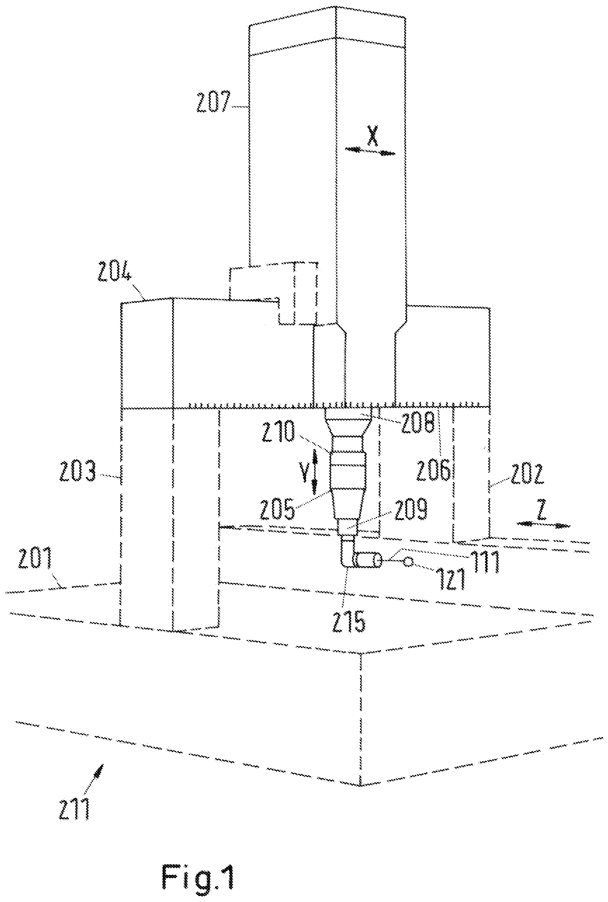

Das in Fig. 1 dargestellte Koordinatenmessgerät (KMG) 211 in Portalbauweise weist einen Messtisch 201 auf, über dem Säulen 202, 203 in Z-Richtung eines kartesischen Koordinatensystems beweglich angeordnet sind. Die Säulen 202, 203 bilden zusammen mit einem Querträger 204 ein Portal des KMG 211. Der Querträger 204 ist an seinen gegenüberliegenden Enden mit den Säulen 202 bzw. 203 verbunden. Nicht näher dargestellte Elektromotoren verursachen die Linearbewegung der Säulen 202, 203 in Z-Richtung. Dabei ist z. B. jeder der beiden Säulen 202, 203 ein Elektromotor zugeordnet.

Der Querträger 204 ist mit einem Querschlitten 207 kombiniert, welcher luftgelagert entlang dem Querträger 204 in X-Richtung des kartesischen Koordinatensystems beweglich ist. Die momentane Position des Querschlittens 207 relativ zu dem Querträger 204 kann anhand einer Maßstabsteilung 206 festgestellt werden. Die Bewegung des Querträgers 204 in X-Richtung wird durch einen weiteren Elektromotor angetrieben.

An dem Querschlitten 207 ist eine in vertikaler Richtung bewegliche Pinole 208 gelagert, die an ihrem unteren Ende über eine Montageeinrichtung 210 und eine Drehvorrichtung 205 mit einer Koordinatenmesseinrichtung 209 verbunden ist. Die Koordinatenmesseinrichtung 209 weist ist einen abgewinkelten Tastkopf 215 auf, an dem ein Taststift 111 mit Tastkugel 121 abnehmbar angeordnet ist. Die Koordinatenmesseinrichtung 209 kann angetrieben durch einen weiteren Elektromotor relativ zu dem Querschlitten 207 in Y-Richtung des kartesischen Koordinatensystems bewegt werden. Durch die Elektromotoren des KMG kann der Tastkopf 209 in dem Bereich unterhalb des Querträgers 204 in nahezu beliebige Positionen bewegt werden. Ferner kann die Drehvorrichtung 205 den Tastkopf 215 um die Y-Achse drehen, sodass der Taststift 111 in unterschiedliche Richtungen ausgerichtet werden kann.

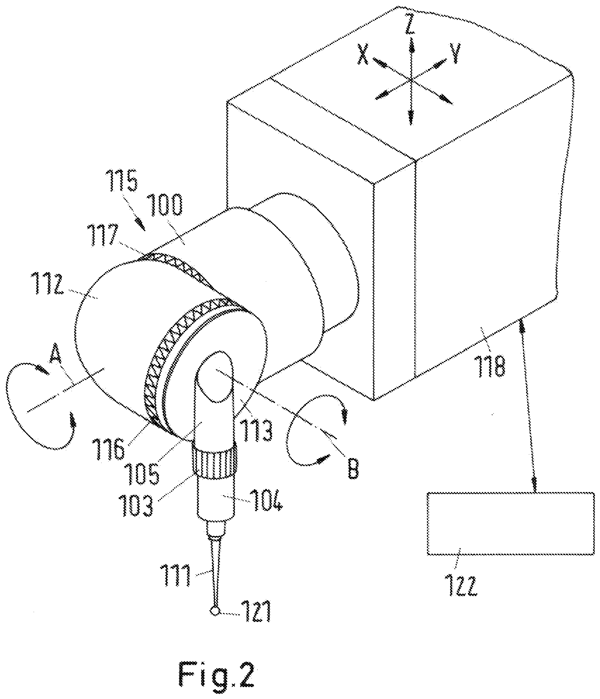

Fig. 2 zeigt einen Arm 118 eines KMG, z.B. die Pinole des in Fig. 1 dargestellten KMG. Am freien Ende des Armes 118 ist eine Drehvorrichtung 115 angeordnet, die zwei rotatorische Freiheitsgrade der Bewegung hat. Eine erste Drehachse A der Drehvorrichtung 115 verläuft etwa in Verlängerung der Längsachse des Armes 118. Eine zweite Drehachse B der Drehvorrichtung 115 verläuft senkrecht zu der ersten Drehachse A. Abhängig von der Drehposition bezüglich der ersten Drehachse weist die zweite Drehachse B daher in unterschiedliche Richtungen.

Ein erster Teil 100 der Drehvorrichtung 115 ist drehfest mit dem Arm 118 verbunden. Ein zweiter Teil 112 der Drehvorrichtung 115 ist relativ zu dem ersten Teil 100 um die erste Drehachse A drehbar. Ein dritter Teil 113 der Drehvorrichtung ist relativ zu dem zweiten Teil 112 um die zweite Drehachse B drehbar.

In dem konkreten Ausführungsbeispiel handelt es sich bei der Drehvorrichtung um eine so genannte rastende Drehvorrichtung, bei der lediglich eine Mehrzahl von vorgegebenen Drehpositionen einstellbar ist. Zur Einstellung einer solchen Drehposition des zweiten Teils relativ zu dem ersten Teil 100 wird der zweite Teil 112 in axialer Richtung der ersten Drehachse A ausgerückt (nach links vorne in Fig. 2) und in die gewünschte neue Drehposition gedreht. Danach wird der zweite Teil wieder durch eine Bewegung in Richtung der ersten Drehachse A eingerückt. Zwischen dem ersten Teil 100 und dem zweiten Teil 112 ist eine mit dem Bezugszeichen 117 bezeichnete Hirth-Verzahnung angedeutet, die das Einrücken und Ausrücken ermöglicht. In entsprechender Weise wird der dritte Teil 113 ein-und ausgerückt, um seine Drehposition relativ zu dem zweiten Teil 112 zu verändern. Zwischen dem zweiten Teil 112 und dem dritten Teil 113 ist ebenfalls eine Hirth-Verzahnung 116 angedeutet.

An dem dritten Teil 113 ist drehfest relativ zu diesem ein Schaft 105 mit einer Kupplung 103 zum lösbaren Ankuppeln eines Tastkopfes 104 angebracht, wobei an dem Tastkopf 104 ebenfalls lösbar ein Taststift 111 mit Tastkugel 121 ankoppelbar ist. Ferner ist schematisch rechts unten in Fig. 2 eine Korrektureinheit 122 dargestellt, die in der Lage ist, translatorische Bewegungen der genannten Teile 100, 112, 113 relativ zu der jeweiligen Drehachse A, B zu berücksichtigen. Entsprechende Sensoren der Drehvorrichtung 115 sind in Fig. 2 nicht dargestellt. Sie sind im Inneren der dargestellten Teile angeordnet.

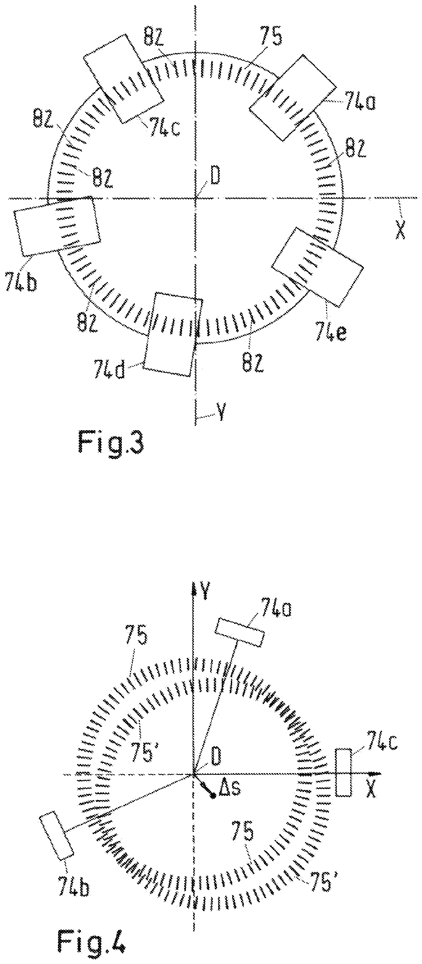

Die Draufsicht in Fig. 3 zeigt einen Messkörper 75, der eine Vielzahl von strichförmigen Markierungen 82 aufweist, die sich in dem Ausführungsbeispiel in radialer Richtung zu einer Drehachse D erstrecken, d.h. senkrecht zur Drehachse D. Idealerweise ist der Winkelabstand der strichförmigen Markierungen 82 konstant, z.B. bei 360 Markierungen würde der Winkelabstand daher 1° betragen. Eine derartige Anordnung von strichförmigen Markierungen auf einem Messkörper wird im Folgenden als Teilkreisscheibe bezeichnet.

Fig. 3 zeigt ferner eine X- Achse und eine Y- Achse eines Koordinatensystems, wobei die X-Achse und die Y-Achse senkrecht zueinander und jeweils senkrecht zu der Rotationsachse (Drehachse D) verlaufen. Ferner sind fünf Sensoren 74a, 74b, 74c, 74c, 74e dargestellt, die um die Drehachse D verteilt angeordnet sind und jeweils in einem Erfassungsbereich einen oder mehrere der strichförmigen Markierungen 82 erfassen können, insbesondere wenn die Markierungen 82 den Erfassungsbereich aufgrund einer Drehbewegung durchlaufen. Die Sensoren 74 sind (nicht dargestellt) an einem ersten Teil einer Drehvorrichtung angeordnet, während ein zweiter Teil der Drehvorrichtung die Teilkreisscheibe aufweist. Der erste und der zweite Teil der Drehvorrichtung sind relativ zueinander um die Drehachse bzw. Rotationsachse D drehbar. Es sind auch andere Gestaltungen von Teilkreisscheiben möglich, insbesondere mit strichförmigen Markierungen, die an dem Außenumfang eines scheibenförmigen Körpers linienartig parallel zur Rotationsachse D verlaufen. Ferner sind entsprechende Gestaltungen, jedoch nicht mit linienförmigen Markierungen, sondern mit magnetischen Markierungen möglich. In diesem Fall erfassen die Sensoren 74 nicht auf optische Weise strichförmige Markierungen, sondern das Magnetfeld, das sich aufgrund des Passierens von magnetischen Markierungen ändert.

Fig. 4 zeigt die Teilkreisscheibe 75 gemäß Fig. 3 oder eine andere Teilkreisscheibe in zwei verschiedenen Positionen. In einer ersten Position ist die Teilkreisscheibe mit dem Bezugszeichen 75 bezeichnet, in einer zweiten Position mit dem Bezugszeichen 75'. Anders als in Fig. 3 sind lediglich drei Sensoren 74a, 74b, 74c dargestellt. Die Rotationsachse D liegt im Zentrum der Teilkreisscheibe in der Position 75. Dagegen ist die Teilkreisscheibe in der Position 75' um einen Translationsvektor Δs verschoben. Durch die Verschiebung hat sich die Teilkreisscheibe translatorisch relativ zu den Sensoren 74 in einer Richtung verschoben, die quer zur Rotationsachse D verläuft, welche in Fig. 4 und Fig. 3 senkrecht zur Figurenebene steht.

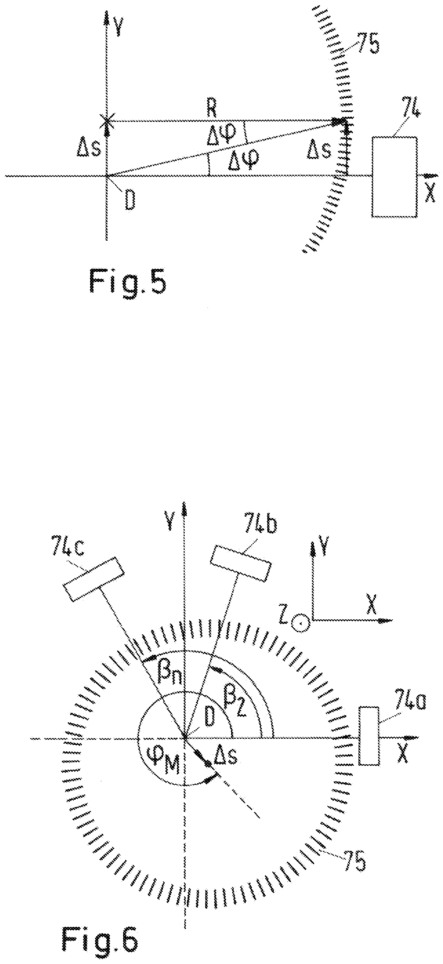

In der Detaildarstellung von Fig. 5 ist ebenfalls der Translationsvektor $\Delta$s erkennbar. Für kleine Beträge der Verschiebung entspricht die Verschiebung einem Drehwinkel $\Delta\varphi$. "Entsprechen" bedeutet dabei, dass der rechts in Fig. 5 dargestellte Sensor 74 aufgrund der translatorischen Verschiebung um den Translationsvektor $\Delta$s ein Messsignal liefert, welches einem Drehwinkel von $\Delta\varphi$ entspricht. Außerdem ist in Fig. 5 noch der Radius R der Teilkreisscheibe dargestellt.

Fig. 6 zeigt die Teilkreisscheibe 75 aus Fig. 3 - 5 oder eine andere Teilkreisscheibe. Wiederum ist die Teilkreisscheibe 75 relativ zu der Drehachse D und damit zum Zentrum der Anordnung der Sensoren 74a, 74b, 74c um den Translationsvektor $\Delta$s verschoben. Ferner sind Winkelpositionen der Sensoren in Bezug auf die X-Achse dargestellt. Die Winkelposition des ersten Sensors 74a ist null, d.h. der Sensor ist in Richtung der X-Achse auf die Teilkreisscheibe 75 ausgerichtet. Der zweite Sensor 74b ist in einer Richtung ausgerichtet, die um den Winkel $\beta_2$ gegen die X-Achse gedreht ist. Der dritte Sensor 74c ist um den Winkelabstand $\beta_n$ in Bezug auf die X-Achse gedreht ausgerichtet. Alle Sensoren 74 (es kann auch eine andere Anzahl als drei Sensoren vorhanden sein) sind auf die Rotationsachse D ausgerichtet.

Ferner ist noch ein Winkelabstand $\varphi_M$ dargestellt (wiederum in Bezug auf die X-Achse), der die Richtung des Translationsvektors $\Delta$s in Bezug auf die X-Achse beschreibt. Durch Angabe der Werte dieses Winkels $\varphi_M$ und des Betrages des Translationsvektors $\Delta$s lässt sich die Translationsbewegung in einer Ebene senkrecht zur Drehachse D eindeutig beschreiben, die die Teilkreisscheibe 75 aus ihrer Idealposition (in der die Drehachse D im Zentrum der Teilkreisscheibe 75 liegt) ausgeführt hat.

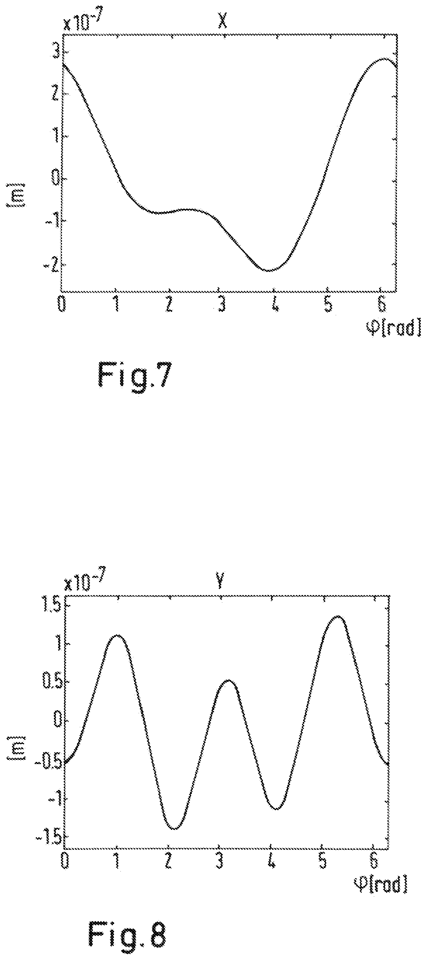

Fig. 7 und Fig. 8 zeigen ein Beispiel für den Verlauf einer Translationsbewegung eines Teils einer Drehvorrichtung, wobei lediglich die Translationsbewegung in einer Ebene senkrecht zur Drehachse der Drehvorrichtung betrachtet wird. Fig. 7 zeigt die X-Komponente der Bewegung und Fig. 8 zeigt die Y-Komponente der Bewegung, d.h. die Figuren zeigen die Bewegungskomponenten in Richtung der X-Achse bzw. in Richtung der Y-Achse eines kartesischen Koordinatensystems. Auf der in den Figuren horizontal verlaufenden Achse des Diagramms ist der Drehwinkel $\varphi$ in Radiant dargestellt. Es ist genau eine Umdrehung um die Drehachse dargestellt. Entlang der in den Fig. 7 und 8 vertikal verlaufenden Achsen ist der Wert des bei der Translationsbewegung zurückgelegten Weges bzw. der Position in der jeweiligen Richtung aufgetragen, z.B. in zehntel Mikrometern. Dabei handelt es sich um typische Werte für eine verhältnismäßig präzise gefertigte Drehachse für den Gebrauch in Koordinatenmessgeräten.

Man erkennt, dass der Verlauf der Bewegung in X-Richtung im Wesentlichen ein Maximum und ein Minimum aufweist, während der Verlauf der Bewegung in Y-Richtung drei Maxima und drei Minima aufweist. Dabei ist der Verlauf der Bewegung in Y-Richtung etwa periodisch, während der Verlauf in X-Richtung in der linken Diagrammhälfte einen abgeplatteten Bereich mit nahezu konstanter X-Position aufweist. Derartige Verläufe wie in Fig. 7 und Fig. 8 treten reproduzierbar auf, wenn sich die äußeren Umstände nicht ändern, z.B. wenn keine sich verändernden mechanischen Kräfte auftreten.

Im Folgenden werden Ausführungsbeispiele für die Berücksichtigung der translatorischen Bewegung von Teilen einer Drehvorrichtung relativ zueinander quer zur Drehachse beschrieben. Die Verfahrensschritte können insbesondere von einer Auswertungseinrichtung ausgeführt werden, die im Falle einer Kalibrieranordnung Teil der Kalibrieranordnung und im Fall eines Koordinatenmessgeräts Teil des KMG ist. In beiden Fällen kann es sich bei der Auswertungseinrichtung um einen Rechner, insbesondere zum Verarbeiten von digitalen Daten, handeln. Die Auswertungseinrichtung ist mit den Sensoren des Sensorsystems verbunden, um von den Sensoren die Messsignale oder bereits aus den Messsignalen erhaltene, weiterverarbeitete Signale zu empfangen. Im Fall eines Sensors zum Erfassen von Markierungen kann z.B. das primäre Messsignal ein Impulssignal sein oder ein Zählerstand der Markierungen, die von dem Sensor erfasst worden sind. Ein weiterverarbeiteter, daraus erhaltener Wert kann z.B. ein zurückgelegter Drehwinkel eines drehbaren Teils der Drehvorrichtung in Bezug auf eine Referenz-Drehposition sein. Im Fall eines Magnetfeldvektors können die primären Messsignale Magnetfeldstärken von mehreren Teil-Sensoren sein. Ein daraus abgeleitetes verarbeitetes sekundäres Messsignal kann die Information über die Richtung des Magnetfeldes am Ort des Magnetfeldsensors enthalten. Die vorangegangenen Ausführungen betreffen nicht nur die folgenden Ausführungsbeispiele, sondern gelten allgemein.

Erstes Ausführungsbeispiel: Bei der Kalibrierung einer Messanordnung zum Bestimmen von Drehpositionen einer Drehvorrichtung ist z.B. ein System von Sensoren und einem Messkörper wie in Fig. 3 oder Fig. 4 dargestellt vorhanden. Insbesondere wie in der oben genannten Veröffentlichung von Geckeler beschrieben, werden aus den von den Sensoren ermittelten Drehpositionen zunächst Differenzen gebildet. Z.B. bezogen auf Fig. 3 werden die Differenzen der von den Sensoren 74a, 74b gelieferten Drehpositionen, die Differenzen der von den Sensoren 74a, 74c gelieferten Drehpositionen, die Differenzen der von den Sensoren 74a, 74d gelieferten Drehpositionen und die Differenzen der von den Sensoren 74a, 74e gelieferten Drehpositionen gebildet. Im Fall von fünf Sensoren sind dies vier Differenzen für jede relative Drehstellung des ersten und zweiten Teils der Drehvorrichtung. Alternativ können sämtliche möglichen Differenzen der von den einzelnen Sensoren erfassten Drehpositionen gebildet werden, d.h. im Fall von fünf Sensoren zehn Differenzen. Auch das weitere Verfahren, das in der Veröffentlichung von Geckeler anhand der Gleichungen (3) bis (13) in Abschnitt 3, Seite 2813, rechte Spalte bis Seite 2814, rechte Spalte oben beschrieben ist, kann mit einem Unterschied, auf den noch eingegangen wird, in gleicher Weise ausgeführt werden. Die Differenzen der Drehpositionen kommen insbesondere in Gleichung (5) in Geckeler als so genannte Winkeldifferenzen oder Satz von Winkeldifferenzen vor. Allerdings wird die Gleichung um Terme erweitert, mit denen die translatorische Bewegung quer zur Drehachse berücksichtigt wird. In dem hier beschriebenen Ausführungsbeispiel lautet die Gleichung wie folgt:

$$\Delta\tilde{\varphi}_k(\varphi) = \tilde{\varphi}_k - \varphi = \varepsilon(\tilde{\varphi}_k) - \varepsilon(\varphi) + \beta_k - \beta_1 + \gamma_k(\varphi) - \gamma_1(\varphi) \qquad (1)$$

Wie in der Veröffentlichung von Geckeler bezeichnen

$\Delta\tilde{\varphi}_k(\varphi)$ die erwähnten Differenzen der Drehpositionen, die von den Sensorpaaren erfasst und geliefert wurden, wobei das Sensorpaar durch den k-ten Sensor und den ersten Sensor gebildet wird und wobei diese Differenzen von dem Drehwinkel $\varphi$, d.h. von der Drehposition abhängig sind. Dabei bezeichnet k einen ganzzahligen Index, der Werte von 2 bis M annimmt, wobei M gleich der Anzahl der Sensoren ist.

$\tilde{\varphi}_k$ bezeichnet die von dem k-ten Sensor erfasste Drehposition. Auf der rechten Seite der Gleichung bedeuten die Symbole $\varepsilon(\tilde{\varphi}_k)$ bzw. $\varepsilon(\varphi)$ den jeweiligen Fehler des Messsystems (z.B. aufgrund nicht idealer konstanter Abstände der strichförmigen Markierungen einer Teilkreisscheibe). Dieser Fehler ist daher nicht der Fehler aufgrund der translatorischen Bewegung. Ferner bedeuten die Symbole $\beta_k$ und $\beta_1$ die Winkelpositionen des k-ten und des ersten Sensors bezüglich einer Referenzposition, entsprechend der Darstellung in Fig. 6 und den anhand von Fig. 6 bereits beschriebenen Winkelpositionen der Sensoren 74. Insbesondere kann die Winkelposition des ersten Sensors die Referenzposition sein. Außerdem enthält die Gleichung als letzte beiden Terme auf der rechten Seite die Bezeichnungen $\gamma_k(\varphi)$ $\gamma_k(\varphi)$ und $\gamma_1(\varphi)$ die Fehler der Drehposition aufgrund von translatorischen Bewegungen quer zur Richtung der Drehachse. Diese Fehler $\gamma_n(\varphi)$ können für den n-ten Sensor wie folgt dargestellt werden:

$$\gamma_n(\varphi) = \Delta s(\varphi) \cdot \frac{\sin(\varphi_M(\varphi) - \beta_n)}{R}$$

$$(2)$$

Dabei ist $\Delta s$ der von der Drehposition der Teile der Drehvorrichtung relativ zueinander abhängige Betrag des Translationsvektors, der bereits anhand von Fig. 4 bis Fig. 6 erläutert wurde. $\varphi_M$ ist wie bereits anhand von Fig. 6 beschrieben ein Winkel, der ein Maß für die Richtung des Translationsvektors $\Delta s$ ist. R ist der in Fig. 5 dargestellte Radius des Messkörpers, insbesondere der Teilkreisscheibe 75. Z. B. ist R der Radius, an dem die Sensoren die Markierungen des Messkörpers erfassen. Bei einer Teilkreisscheibe, die koaxial zu der Drehachse angeordnet ist, befinden sich die einzelnen Markierungen der Teilkreisscheibe alle im Abstand R von der Drehachse. Im verschobenen Zustand der Teilkreisscheibe ist jedoch das Zentrum der Teilkreisscheibe gegen die Drehachse verschoben (z.B. Fig. 5).

Die Winkelposition des Referenzwinkels kann z. B. vorab durch Aufnahme von Messwerten aller Sensoren bei einer vollständigen Umdrehung der Drehvorrichtung ermittelt werden. Dem liegt der Gedanke zugrunde, dass die Folge der Messsignale aller Sensoren dieselben charakteristischen Informationen enthält, aus der sich die Referenzwinkelposition bestimmen lässt und damit auch die Winkelposition des Sensors bezüglich dem Referenzwinkel. Der Radius R kann auf andere Weise ermittelt werden (z.B. durch unmittelbare Messung mit einem Maßstab). Ferner kommt es im Ergebnis nicht auf den Absolutwert des Radius an, da von den Sensoren lediglich Drehpositionen zu bestimmen sind und sich, wie die obige Gleichung zeigt, aus dem Verhältnis der Verschiebung $\Delta s/R$ die Information über den Translationsfehler ermitteln lässt.

Durch Einsetzen von obiger Gleichung (2) in obige Gleichung (1) erhält man daher eine der Gleichung (5) in der Veröffentlichung von Geckeler (linke Spalte auf Seite 2814) entsprechende Gleichung. Nun kann der weiter in der Veröffentlichung von Geckeler in der linken Spalte auf Seite 2814 stehende Verfahrensablauf durchlaufen werden, nämlich Fourier-Transformation und Anwendung einer Transferfunktion. Gleichung (9) in Geckeler definiert die Fourier-Transformation. In Gleichungen (10) und (11) in Geckeler wird die Transferfunktion eingeführt. In Gleichung (12) von Geckeler wird die oben bereits beschriebene Gewichtung vorgenommen.

Gemäß dem ersten Ausführungsbeispiel wird nun im Frequenzraum (also nach der erfolgten Fourier-Transformation) eine Fehlerseparation der Fehler des Messsystems und der Fehler aufgrund der translatorischen Bewegung quer zur Richtung der Drehachse vorgenommen. Z.B. durch anschließende Rücktransformation in den Ortsraum (im Gegensatz zum Fourier-transformierten Frequenzraum) können dann die einzelnen Fehler berechnet werden.

Bei einem zweiten Ausführungsbeispiel wird genauso wie im ersten Ausführungsbeispiel vorgegangen, wobei jedoch die Fehler nicht im Frequenzraum separiert werden, sondern die Parameter in obiger Gleichung (2) (nämlich der Betrag Δs und die Richtung $\varphi_M$ des Translationsvektors der Verschiebung) solange variiert werden, bis bezüglich folgender Bedingung ein Optimum gefunden wurde: Für alle Sensoren der Mehrzahl von Sensoren ist das Produkt der Transferfunktion (Gleichung (11) in Geckeler, linke Spalte auf Seite 2814) und der Fourier-Transformierten der Differenz von den Sensoren gemessenen Drehposition für jedes beliebige Paar von Sensoren gleich. Diese Bedingung ist äquivalent zu der Bedingung, dass die Translationsbewegung keinen Einfluss auf das Ergebnis des Verfahrens gemäß Geckeler hat, der ja die Translationsbewegung nicht berücksichtigt und lediglich den Fehler des Messsystems bestimmen möchte. Das genannte Produkt der Transferfunktion und der Fourier-Transformierten der Differenz der Drehpositionen ist Gegenstand von Gleichung (10) in Geckeler, linke Spalte auf Seite 2814. Anders ausgedrückt wird durch die Variation des Betrages und der Richtung des Translationsvektors der tatsächliche Translationsvektor gefunden. Diese iterative Optimierung wird für jede Drehstellung des ersten und zweiten Teils der Drehvorrichtung durchgeführt, für welche die Translationsbewegung bestimmt bzw. eliminiert werden soll. Dem liegt der Gedanke zugrunde, dass der Translationsvektor selbstverständlich im Allgemeinen für jede Drehstellung der Drehvorrichtung verschieden ist, wie beispielsweise die in Fig. 7 und Fig. 8 gezeigten Ergebnisse für eine reale Drehvorrichtung zeigen. Beispielsweise kann bei der iterativen Suche bzw. Optimierung das Verfahren der simulierten Abkühlung (englisch: simulated annealing) angewendet werden. Dabei handelt es sich um ein heuristisches Optimierungsverfahren. Es wird eine approximative Lösung gefunden. Es wird solange iterativ nach der besten Lösung des Optimierungsproblems (hier dem Auffinden der Richtung und des Betrages des Translationsvektors) gesucht, bis ein Abbruchkriterium erfüllt ist. Alternativ kann z.B. ein Optimierungsalgorithmus nach Gerchberg Saxton angewendet werden. Dabei werden die beiden freien Parameter (hier: Richtung und Betrag des Translationsvektors) verändert, bis eine möglichst optimale Übereinstimmung des simulierten Ergebnisses mit den realen Messdaten erreicht wird. Für diese Übereinstimmung kann ein Restfehler als Abbruchkriterium definiert werden. Dieser Restfehler kann z.B. in geeigneter Weise für die Anwendung bei Koordinatenmessgeräten im Bereich von einer Winkelsekunde oder darunter liegen.

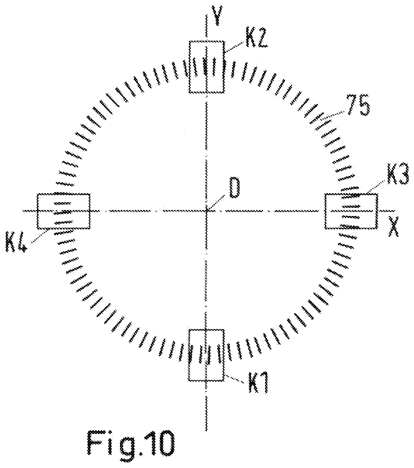

Ein drittes Ausführungsbeispiel betrifft die Berücksichtigung des Translationsfehlers während des Betriebes eines Koordinatenmessgeräts, wobei von einem bereits kalibrierten Messsystem ausgegangen wird. Wie in Fig. 10 dargestellt, sind zumindest zwei Paare von Sensoren K1, K2; K3, K4 Bestandteil der Drehvorrichtung. Außerdem weist die Drehvorrichtung, ähnlich wie z.B. oben anhand von Fig. 3 beschrieben, einen Messkörper auf, der mit den Sensoren K zusammenwirkt. Dabei kann es sich z.B. wiederum um die bereits beschriebene Teilkreisscheibe 75 handeln. Das Besondere der Sensoranordnung gemäß Fig. 10 gegenüber z.B. der Sensoranordnung gemäß Fig. 3 besteht darin, dass die beiden Sensoren K1, K2 bzw. K3, K4, die zu einem Paar von Sensoren gehören, bezüglich der Rotationsachse D einander gegenüberliegend angeordnet sind, jedenfalls dann, wenn die Rotationsachse D im Zentrum der Teilkreisscheibe oder des anderen Messkörpers liegt. Im Fall eines Messkörpers, der ein Magnetfeld mit lediglich zwei Polen erzeugt, liegt das Zentrum in der Mitte zwischen Nordpol und Südpol.

Führen die Teile der Drehvorrichtung eine translatorische Bewegung relativ zueinander in X-Richtung aus, dann messen die Sensoren K1, K2 jeweils eine entsprechende Verschiebung, jedoch mit umgekehrten Vorzeichen. Entsprechendes gilt für eine translatorische Bewegung in Y-Richtung für die Sensoren K3, K4. Dabei sei daran erinnert, dass die von den Sensoren K erfassten Verschiebungen mittels derselben Messtechnik und unter Beobachtung derselben Merkmale des Messkörpers erfasst wird, die auch für die Bestimmung der Drehposition genutzt werden. Insbesondere sind keine zusätzlichen Markierungen oder gar ein zusätzlicher Messkörper erforderlich.

Gemäß dem dritten Ausführungsbeispiel wird daher lediglich die Differenz der Messsignale oder daraus abgeleiteten Messwerte jeweils des Paares von Sensoren K1, K2; K3, K4 gebildet, um die Translationsbewegung zu bestimmen. Alternativ kann durch Addition der Messsignale bzw. daraus abgeleiteten Messwerte des Paars von Sensoren K1, K2 oder K3, K4 die Translationsbewegung unmittelbar eliminiert werden, ohne die Translationsbewegung zu bestimmen.

Wenn z.B. lediglich drei Drehpositionssensoren für die Berücksichtigung der Translationsbewegung während des laufenden Betriebes der Drehvorrichtung verwendet werden, misst nicht jeder der drei Sensoren eine Komponente der translatorischen Bewegung oder der translatorischen Position, die eindeutig einer Koordinatenachse eines kartesischen Koordinatensystems zuzuordnen ist. Durch einfache Berechnung der Bewegungskomponenten oder der kartesischen Koordinaten bezüglich zweier zueinander senkrecht und senkrecht zur Drehachse verlaufender Koordinatenachsen ist aber eine Umrechnung auf einfache Weise möglich. Dabei können z.B. unter Verwendung der Winkelpositionen der Drehpositionssensoren mittels einfacher trigonometrischer Beziehungen die gewünschten kartesischen Koordinaten berechnet werden.

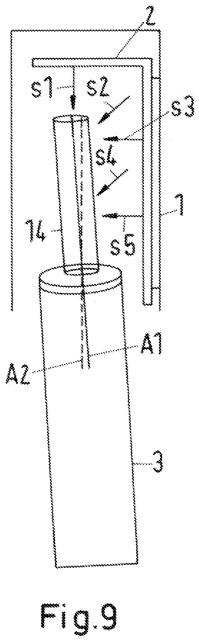

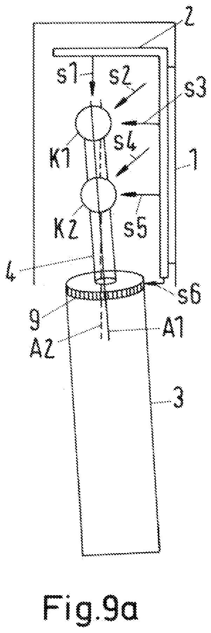

Fig. 9 zeigt schematisch eine Drehvorrichtung mit einem Messsystem, das eine Mehrzahl von Sensoren aufweist, nämlich in dem Ausführungsbeispiel fünf Sensoren, die wiederum schematisch durch Pfeile dargestellt sind. Dabei gibt die Pfeilrichtung die Ausrichtung des Sensors wieder, d. h. in der Richtung des Pfeils befindet sich der Erfassungsbereich des jeweiligen Sensors s1, s2, s3, s4, s5. Die Drehvorrichtung weist einen ersten Teil 1 und einen zweiten Teil 3 auf, die um eine Drehachse A1 relativ zueinander verdrehbar sind. In dem Ausführungsbeispiel ist der zweite Teil 3 ein zylindrischer Körper, der etwa rotationssymmetrisch zu der Drehachse A1 ausgebildet ist. Er weist an seinem oberen Ende einen weiteren zylindrischen Körper 14 mit geringerem Außendurchmesser auf, der ebenfalls koaxial zu der Drehachse A1 verläuft.

Wie die Fig. 9 zeigt, ist die Drehachse A1 jedoch gegen eine zweite Achse A2 verkippt ausgerichtet. Diese zweite Achse A2 ist eine Symmetrieachse des ersten Teils 1. Ohne die Verkippung der Achsen A1, A2 gegeneinander würde bei einer Drehbewegung um die Drehachse A1 der Messkörper 14 eine ideale Drehbewegung um die zweite Achse A2 ausführen. An dem ersten Teil 1 sind die genannten Sensoren über eine Halterung 2 an dem ersten Teil 1 befestigt und auf die genannte Idealposition des Messkörpers 14 ausgerichtet. Die Sensoren sind jedoch auch bei der Verkippung der Achsen dazu in der Lage, Messwerte zu liefern.

Sensor s1 ist ausgestaltet, eine Relativposition, insbesondere einen Abstand, zwischen dem Sensor s1 und dem zugeordneten Messkörper 14 in axialer Richtung (d.h. in Richtung der Achse A2) zu messen. Die Sensoren s2, s3 sowie s4, s5 befinden sich an verschiedenen axialen Positionen der Achsen A1, A2. Die Sensoren sind gemäß der hier beschriebenen speziellen Ausführungsform ausgestaltet, Drehpositionen des Messkörpers 14 relativ zu den Sensoren zu messen. Dazu befindet sich z. B. am Außenumfang des Messkörpers 14 umlaufend eine Vielzahl von Markierungen, z. B. strichförmigen Markierungen, die parallel zur Drehachse A1 verlaufen. In diesem Fall sind die Sensoren s2 bis s5 optische Sensoren. Andere Ausführungen des Messkörpers sind möglich.

Die Darstellung in Fig. 9 ist schematisch zu verstehen. In der Praxis wird es bevorzugt, dass an jeder axialen Position nicht nur zwei Sensoren s2, s3; s4, s5, sondern zumindest drei der Drehpositionssensoren angeordnet sind. Daher kann an jeder axialen Position die Drehposition der Teile 1, 3 relativ zueinander und außerdem entsprechend der Erfindung auch die translatorische Relativposition oder Relativbewegung bestimmt oder aus den Ergebnissen der Messung eliminiert werden. Da in der Praxis die Bestimmung der Drehposition an einer axialen Position der Drehachse A1 ausreicht, ist bei einer Variante der in Fig. 9 gezeigten Anordnung lediglich an einer axialen Position eine Mehrzahl der Drehpositionssensoren angeordnet und ist an der anderen axialen Position (z. B. mit den Sensoren s2, s3) ein Satz von Abstandsdetektoren vorgesehen, die lediglich den Abstand zwischen dem Sensor und dem Messkörper 14 erfassen. Ferner ist es möglich, dass an zumindest einer der beiden axialen Positionen sowohl Abstandssensoren als auch Drehpositionssensoren vorhanden sind. In diesem Fall ist es sogar möglich, redundante Informationen über die translatorische Position zu gewinnen.

Weitere Modifikationen des in Fig. 9 gezeigten Messsystems sind möglich. Z. B. muss der zylindrische Stab 14 nicht eine in axialer Richtung durchgehende Zylinderoberfläche mit konstantem Durchmesser aufweisen. Vielmehr können an den axialen Positionen, an denen sich gemäß Fig. 9 die Messkörper K1, K2 befinden, zylinderförmige Bereiche des Stabes ausgebildet sein, wobei der Stab ansonsten anders geformt ist, z. B. einen geringeren Außendurchmesser hat.

Mit dem Messsystem gemäß Fig. 9 oder mit jeder Variante des Messsystems gemäß Fig. 9 kann ein weiteres Messsystem zur Messung der Drehposition des ersten und des zweiten Teils der Drehvorrichtung relativ zueinander kombiniert sein. Dies wird nun schematisch anhand von Fig. 9a erläutert. Dabei ist eine Variante des in Fig. 9 dargestellten Messsystems zur Bestimmung von fünf Freiheitsgraden der Bewegung dargestellt. Statt des zylindrischen Messkörpers 14 ist mit dem zweiten Teil 3 ein stabförmiges Element 4 verbunden, welches sich in axialer Richtung etwa über dieselbe Länge erstreckt wie der zylindrische Messkörper 14 gemäß Fig. 9. An dem stabförmigen Element 4 sind zwei kugelförmige Messkörper K1, K2 ausgestaltet und/oder angeordnet. Mit dem ersten Messkörper K1 wirken die Sensoren s1 bis s3 zusammen. Mit dem zweiten Messkörper K2, der sich in einer anderen axialen Position als der erste Messkörper K1 befindet, wirken die Sensoren s4, s5 zusammen. Die Funktion der Sensoren s1 bis s5 ist insbesondere dieselbe wie bereits anhand von Fig. 9 erwähnt. Im Folgenden wird das Messsystem mit den Sensoren s1 bis s5, K1, K2 als zusätzliches Messsystem bezeichnet, da es für die Korrektur von Messergebnissen eines weiteren Messsystems genutzt wird, das der Bestimmung der Drehposition des ersten Teils 1 relativ zu dem zweiten Teil 3 dient. Z.B., wie Fig. 9a zeigt, ist am oberen Ende des zweiten Teils 3, wo das stabförmige Element 4 ansetzt, eine Teilkreisscheibe 9 als Messkörper angeordnet. An den Träger 2 ist ferner ein weiterer Sensor s6 angeordnet, der ein Drehpositionssensor zur Bestimmung der Drehposition ist. Dieses Drehpositionsmesssystem kann jedoch auch anders ausgestaltet sein. Z.B. können die Markierungen der Teilkreisscheibe nicht wie dargestellt am Außenumfang eines zylindrischen Messkörpers ausgebildet sein, sondern an einer Fläche eines Messkörpers ausgebildet sein, die sich quer zur Drehachse erstreckt. Auch könnten wie bereits erwähnt magnetische Markierungen vorhanden sein und der zumindest eine Drehpositionssensor entsprechend als Magnetfeldsensor ausgestaltet sein. Weitere Varianten sind möglich.

Da die translatorische Position und/oder Bewegung des ersten Teils 1 relativ zum zweiten Teil 3 an verschiedenen axialen Positionen bezüglich der Drehachse A1 von den Sensoren s2 bis s5 erfasst wird, kann die translatorische Bewegung am Ort der Teilkreisscheibe bzw. des Drehpositionsmesssystems ermittelt werden. "Am Ort" bedeutet in diesem Fall an der entsprechenden axialen Position des Drehpositionsmesssystems. Diese abgeleitete Information über die translatorische Bewegung am Ort des Drehpositionsmesssystems wird nun zur Korrektur der Messsignale des zumindest einen Drehpositionsmesssensors s6 und/oder von daraus abgeleiteten Messwerten genutzt. Auf Beispiele wurde bereits eingegangen.

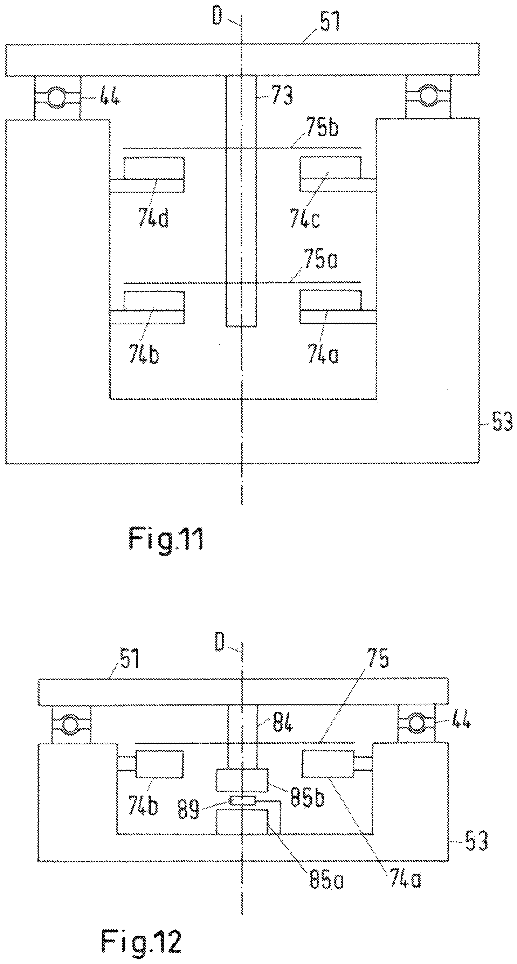

Fig. 11 zeigt einen Stator 53 und einen Rotor (drehbares Teil) 51 als Teile einer Drehvorrichtung, die über ein Drehlager 44 miteinander gekoppelt sind. Von dem Rotor 51 ragt ein stabförmiger Träger 73 nach unten in den Hohlraum des Stators 53, wobei der stabförmige Träger 73 drehfest an dem Rotor 51 befestigt ist und koaxial zu der Drehachse D der Drehvorrichtung angeordnet ist. An verschiedenen axialen Positionen bezüglich der Drehachse D trägt der Stab 73 jeweils eine Scheibe 75a, 75b, die z.B. wie in Fig. 3 gezeigt eine Struktur mit einer Vielzahl von Markierungen 82 aufweist, die in einem Abstand zueinander auf der Scheibe oder an der Scheibe angeordnet sind. Diese voneinander beabstandeten Markierungen können somit als Gitter bezeichnet werden, im Fall von strichförmigen Markierungen als Strichgitter. Die Sensoren 74a, 74b bzw. 74c, 74d sind bezüglich der Drehachse D an einander gegenüberliegenden Positionen angeordnet. Jeder der Sensoren 74a, 74b; 74c, 74d ist ausgestaltet, die Drehposition des Rotors 51 und des Stators 53 relativ zueinander zu bestimmen, indem insbesondere die Markierungen auf den Schreiben 75a, 75b erfasst werden. Vorzugsweise ist an jeder der beiden axialen Positionen bezüglich der Drehachse D ein weiteres Paar von Sensoren angeordnet, sodass in einer axialen Draufsicht ähnlich Fig. 10 sich jeweils zwei der Sensoren bezüglich der Drehachse D gegenüber liegen. Daher ist es mit der in Fig. 11 gezeigten Anordnung möglich, die Effekte der Transaktionsbewegungen der Teile 51, 53 der Drehvorrichtung senkrecht zur Richtung der Drehachse D zu ermitteln, zu berücksichtigen und/oder zu eliminieren. Insbesondere sind daher Taumelfehler und Rundlauffehler ermittelbar.

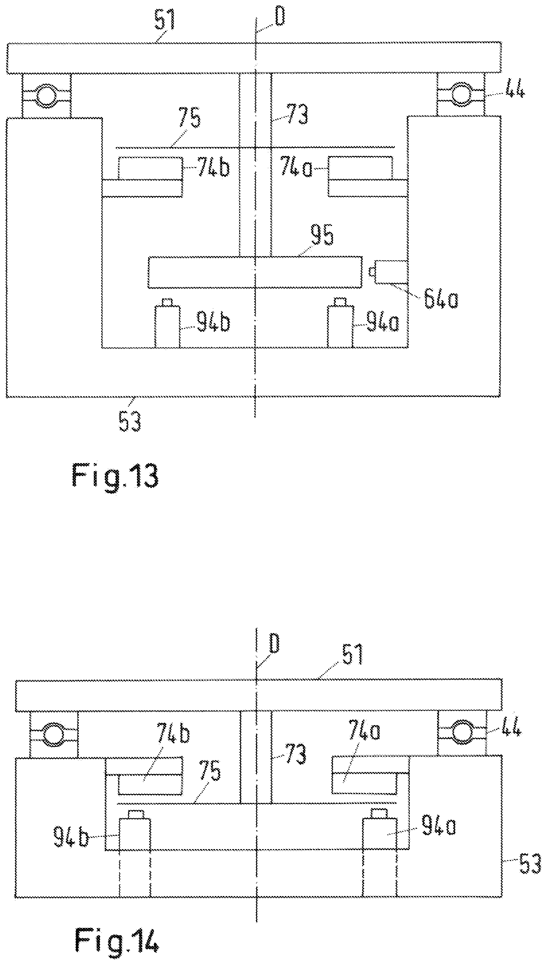

Einen ähnlichen Aufbau wie in Fig. 11 zeigt Fig. 12, wobei jedoch lediglich an einer axialen Position der Drehachse D eine Anordnung mit einer Mehrzahl von Sensoren 74 vorgesehen ist. Wiederum handelt es sich vorzugsweise um vier Sensoren zur Erfassung der Drehposition der Scheibe 75, die wie in der Draufsicht von Fig. 10 dargestellt angeordnet sind. Zusätzlich ist ein Messsystem zur Bestimmung der axialen Position des Rotors 51 relativ zum Stator 53 vorgesehen. Der verhältnismäßig lange stabförmige Träger 71 der Ausführungsform gemäß Fig. 11 ist bei der Ausführungsform gemäß Fig. 12 durch einen kürzeren stabförmigen Träger 84 ersetzt, der ebenfalls die Scheibe 75 trägt. Ferner ist an seinem unteren, freien Ende ein erster Magnet 85b angeordnet. Ein zweiter Magnet 85a ist unterhalb des ersten Magnets 85b am Boden des Stators 53 angeordnet. Zwischen den Magneten 85 befindet sich ein Sensors 89 in axialem Abstand zu beiden Magneten 85, wobei der Sensor 89 ebenfalls an dem Stator 53 befestigt ist. Aufgrund der beiden Magnete 85 wird am Ort des Sensors 89 ein besonders starkes Magnetfeld erzeugt, so dass die örtliche Auflösung bei der Messung der axialen Position besonders hoch ist. Allerdings ist der untere Magnet 85a nicht zwingend erforderlich. Fig. 13 zeigt eine Kombination von zwei verschiedenen Messsystemen bzw. Teil-Messsystemen. Der Stator 53, die Drehlagerung 44, der Rotor 51 mit samt dem nach unten abragenden stabförmigen Träger 73 und dem oberen Teil-Messsystem mit der Scheibe 75 sind wie in Fig. 11 und 12 ausgestaltet, wobei jedoch der stabförmige Träger in axialer Richtung kürzer ist als in Fig. 11 und keinen Magneten trägt, sondern lediglich die Scheibe 75 und an seinem unteren Ende einen zusätzlichen Messkörper 95. Dieser zusätzliche Messkörper 95 weist eine zylinderförmige Scheibe auf, auf deren in Umfangsrichtung verlaufenden Außenrand ein erster Sensor 64a zur Ermittlung der radialen Relativposition zwischen der Zylinderscheibe 95 und dem Stator 53 ausgerichtet ist. Ferner sind zwei in axialer Richtung, d.h. parallel zur Richtung der Drehachse D, auf eine ebene Oberfläche der Zylinderscheibe 95 ausgerichtete Sensoren 94a, 94b mit dem Stator 53 verbunden. Diese beiden Sensoren 94 erlauben nicht nur die Bestimmung der axialen Relativposition zwischen der Zylinderscheibe 95 und damit dem Rotor 51 einerseits und dem Stator 53 andererseits, sondern auch die Bestimmung des Taumelfehlers.

Eine besonders niedrig bauende Ausführungsform, d.h. die Erstreckung entlang der Drehachse D ist besonders klein, ist in Fig. 14 dargestellt. Wiederum ist ein Messsystem mit einer an dem stabförmigen Träger 73 des Rotors 51 angeordneten Scheibe 75 vorhanden, die eine Vielzahl von Markierungen trägt. Jedoch sind die zugeordneten Drehpositionssensoren 74 auf der einen axialen Seite (nämlich oben in Fig. 14) der Scheibe 75 angeordnet. Auf der gegenüberliegenden axialen Seite der Scheibe 75, nämlich unten in Fig. 14, sind zwei Sensoren 94a, 94b ähnlich wie in Fig. 13 im unteren Teil-Messsystem angeordnet. Diese Sensoren 94 sind parallel zur Drehachse D ausgerichtet. Wiederum erlauben diese beiden Sensoren 94 die Bestimmung der axialen Relativposition von Stator 53 und Rotor 51 sowie (gemeinsam mit dem oberen Messsystem) die Bestimmung des Taumelfehlers.

**Patentansprüche**

1. Verfahren zum Kalibrieren einer Messanordnung (74, 75) zum Bestimmen von Drehpositionen einer Drehvorrichtung (51, 53), die einen ersten Teil (51) und einen relativ zu dem ersten Teil (51) um eine Drehachse (D) drehbaren zweiten Teil (53) aufweist, wobei:

   • in verschiedenen Drehstellungen der Drehvorrichtung (51, 53) jeweils mit einer Mehrzahl von Sensoren (74) Messwerte von Drehpositionen des ersten Teils (51) und des zweiten Teil (53) relativ zueinander erfasst werden, wobei die Sensoren (74) an verschiedenen Winkelpositionen um die Drehachse (D) herum verteilt angeordnet sind, und jeweils ein der erfassten Drehposition entsprechendes Messsignal erzeugt wird, sodass redundante Informationen über jede der Drehstellungen der Drehvorrichtung (51, 53) vorliegen,
   • ein Rechenmodell bereitgestellt wird oder ist, in dem Differenzen der von verschiedenen Sensoren (74) erfassten Drehpositionen gebildet werden, und zwar jeweils paarweise für die von zwei der Sensoren (74) erfassten Drehpositionen und/oder jeweils zwischen einer von einem der Sensoren (74) erfassten Drehposition und einer Referenz-Drehposition, und wobei die Differenzen und somit die redundanten Informationen durch

- dem jeweiligen Sensor (74) zugeordnete translatorische Fehler der erfassten Drehposition aufgrund einer translatorischen Bewegung quer zur Erstreckung der Drehachse (D),
- Messfehler der Messanordnung, die nicht Fehler aufgrund einer translatorischen Bewegung sind, und
- Winkelpositionen der Sensoren um die Drehachse

ausgedrückt werden,
• aus dem Rechenmodell die dem jeweiligen Sensor (74) zugeordneten translatorischen Fehler und die Messfehler der Messanordnung ermittelt werden sowie die Messanordnung (74, 75) unter Berücksichtigung der translatorischen Fehler und der Messfehler der Messanordnung kalibriert wird.

2. Verfahren nach Anspruch 1, wobei zumindest ein Teil der Messanordnung kalibriert wird, indem aus den redundanten Informationen Kalibrierinformationen gewonnen werden, die es erlauben, aus den Messsignalen des jeweiligen Sensors (74) tatsächliche Drehpositionen des ersten Teils (51) und zweiten Teils (53) relativ zueinander zu ermitteln, die nicht von translatorischen Bewegungen des ersten (51) und des zweiten (53) Teils relativ zueinander abhängen, welche reproduzierbar während Drehbewegungen des ersten (51) und des zweiten (53) Teils relativ zueinander auftreten.

3. Verfahren zum Betreiben einer Drehvorrichtung, wobei die Drehvorrichtung einen ersten Teil (51) und einen relativ zu dem ersten Teil (51) um eine Drehachse (D) drehbaren zweiten Teil (53) aufweist und wobei

• in verschiedenen Drehstellungen der Drehvorrichtung (51, 53) jeweils mit einer Mehrzahl von Sensoren (74) Messwerte von Drehpositionen des ersten Teils (51) und des zweiten Teils (53) relativ zueinander erfasst werden, wobei die Sensoren (74) an verschiedenen Winkelpositionen um die Drehachse (D) herum verteilt angeordnet sind, und jeweils ein der erfassten Drehposition entsprechendes Messsignal erzeugt wird, sodass redundante Informationen über jede der Drehstellungen der Drehvorrichtung (51, 53) vorliegen,
• ein Rechenmodell bereitgestellt wird oder ist, in dem Differenzen der von verschiedenen Sensoren (74) erfassten Drehpositionen gebildet werden, und zwar jeweils paarweise für die von zwei der Sensoren (74) erfassten Drehpositionen und/oder jeweils zwischen einer von einem der Sensoren (74) erfassten Drehposition und einer Referenz-Drehposition, und wobei die Differenzen und somit die redundanten Informationen durch

- dem jeweiligen Sensor (74) zugeordnete translatorische Fehler der erfassten Drehposition aufgrund einer translatorischen Bewegung quer zur Erstreckung der Drehachse (D),
- Messfehler der Messanordnung, die nicht Fehler aufgrund einer translatorischen Bewegung sind, und
- Winkelpositionen der Sensoren um die Drehachse

ausgedrückt werden,
• aus dem Rechenmodell die dem jeweiligen Sensor (74) zugeordneten translatorischen Fehler und die Messfehler der Messanordnung ermittelt werden sowie die translatorischen Fehler und die Messfehler der Messanordnung beim Betrieb der Drehvorrichtung korrigiert werden.

4. Verfahren nach Anspruch 3, wobei die Drehvorrichtung Bestandteil eines Koordinatenmessgeräts (211) zur Messung von Koordinaten eines Werkstücks ist, wobei der erste Teil (51) und der zweite Teil (53) relativ zueinander durch eine Drehbewegung um eine Drehachse (D) gedreht werden und dadurch eine Position und/oder Ausrichtung einer Koordinatenmesseinrichtung (209) des Koordinatenmessgeräts (211) eingestellt wird, wobei die redundanten Informationen aus Drehpositionen des ersten Teils (51) und zweiten Teils (53) relativ zueinander gewonnen werden, die unmittelbar vor, während und/oder unmittelbar nach der Drehbewegung von den Sensoren (74) erfasst werden, und wobei die Effekte der translatorischen Bewegung bei einer Bestimmung von Koordinaten eines Werkstücks, das mit der Koordinatenmesseinrichtung (209) in der eingestellten Position und/oder Ausrichtung der Koordinatenmesseinrichtung (209) vermessen wird, berücksichtigt werden.

5. Verfahren nach einem der Ansprüche 1 bis 4, wobei unter Anwendung eines vorgegebenen Optimierungsalgorithmus iterativ Lösungen des Rechenmodells ermittelt werden, wobei in jedem Iterationsschritt Parameterwerte festgelegt sind und gemäß dem Optimierungsalgorithmus für den jeweils nächsten Iterationsschritt neue Parameterwerte gefunden werden.

6. Verfahren nach Anspruch 5, wobei solange iterativ nach der besten Lösung des Rechenmodells gesucht wird, bis ein Abbruchkriterium erfüllt ist.

7. Kalibrieranordnung zum Kalibrieren einer Messanordnung zum Bestimmen von Drehpositionen einer Drehvorrichtung, die einen ersten Teil (51) und einen relativ zu dem ersten Teil (51) um eine Drehachse (D) drehbaren zweiten Teil (53) aufweist, wobei die Kalibrieranordnung aufweist:

  • eine Mehrzahl von Sensoren (74), die an verschiedenen Winkelpositionen um die Drehachse (D) herum verteilt angeordnet sind und die jeweils an einem der Teile (51, 53) angeordnet sind,
  • zumindest einen Messkörper (75), der an dem anderen der Teile (51, 53) angeordnet ist und zumindest einem der Sensoren (74) zugeordnet ist, wobei der Sensor (74) ausgestaltet ist, ein Messsignal entsprechend einer Drehposition des Messkörpers (75) und damit entsprechend der relativen Drehposition des ersten und zweiten Teils (53) zu erzeugen,
  • eine Auswertungseinrichtung, die mit den Sensoren (74) zum Empfang von Messsignalen der Sensoren (74) verbunden ist und die ausgestaltet ist, ein Rechenmodell zu verwenden, in dem Differenzen der von verschiedenen Sensoren (74) erfassten Drehpositionen gebildet werden, und zwar jeweils paarweise für die von zwei der Sensoren erfassten Drehpositionen und/oder jeweils zwischen einer von einem der Sensoren (74) erfassten Drehposition und einer Referenz-Drehposition, und wobei die Differenzen und somit die redundanten Informationen durch

    - dem jeweiligen Sensor (74) zugeordnete translatorische Fehler der erfassten Drehposition aufgrund einer translatorischen Bewegung quer zur Erstreckung der Drehachse (D),
    - Messfehler der Messanordnung, die nicht Fehler aufgrund einer translatorischen Bewegung sind, und
    - Winkelpositionen der Sensoren um die Drehachse

ausgedrückt werden, und aus dem Rechenmodell die dem jeweiligen Sensor (74) zugeordneten translatorischen Fehler und die Messfehler der Messanordnung zu ermitteln sowie die translatorischen Fehler und die Messfehler der Messanordnung für den Betrieb der Drehvorrichtung zu korrigieren.

8. Kalibrieranordnung nach Anspruch 7, wobei die Auswertungseinrichtung ausgestaltet ist, die Messanordnung zu kalibrieren, indem aus den erfassten Drehpositionen Kalibrierinformationen gewonnen werden, die es erlauben, aus den Messsignalen des jeweiligen Sensors tatsächliche Drehpositionen des ersten Teils (51) und zweiten Teils (53) relativ zueinander zu ermitteln, die nicht von translatorischen Bewegungen des ersten (51) und des zweiten (53) Teils relativ zueinander abhängen, welche reproduzierbar während Drehbewegungen des ersten (51) und des zweiten (53) Teils relativ zueinander auftreten.

9. Kalibrieranordnung nach Anspruch 7 oder 8, wobei die Auswertungseinrichtung ausgestaltet ist, unter Anwendung eines vorgegebenen Optimierungsalgorithmus iterativ Lösungen des Rechenmodells zu ermitteln, wobei in jedem Iterationsschritt Parameterwerte festgelegt sind und gemäß dem Optimierungsalgorithmus für den jeweils nächsten Iterationsschritt neue Parameterwerte gefunden werden.

10. Kalibrieranordnung nach Anspruch 9, wobei die Auswertungseinrichtung ausgestaltet ist, solange iterativ nach der besten Lösung des Rechenmodells suchen, bis ein Abbruchkriterium erfüllt ist.

11. Drehvorrichtung, wobei die Drehvorrichtung einen ersten Teil (51) und einen relativ zu dem ersten Teil (51) um eine Drehachse (D) drehbaren zweiten Teil (53) aufweist und wobei die Drehvorrichtung ferner aufweist:

  • eine Mehrzahl von Sensoren (74), die an verschiedenen Winkelpositionen um die Drehachse (D) herum verteilt angeordnet sind und die jeweils an einem der Teile (51, 53) angeordnet sind,
  • zumindest einen Messkörper (75), der an dem anderen der Teile (51, 53) angeordnet ist und zumindest einem der Sensoren (74) zugeordnet ist, wobei der zugeordnete Sensor (74) ausgestaltet ist, ein Messsignal entsprechend einer Drehposition des Messkörpers (75) und damit entsprechend der relativen Drehposition des ersten und zweiten Teils (53) zu erzeugen,
  • eine Auswertungseinrichtung (122), die mit den Sensoren (74) zum Empfang von Messsignalen der Sensoren (74) verbunden ist und die ausgestaltet ist, ein Rechenmodell bereitzustellen oder zu verwenden, in dem Differenzen der von verschiedenen Sensoren (74) erfassten Drehpositionen gebildet werden, und zwar jeweils paarweise für die von zwei der Sensoren (74) erfassten Drehpositionen und/oder jeweils zwischen einer von einem der Sensoren (74) erfassten Drehposition und einer Referenz-Drehposition, und wobei die Differenzen und somit die redundanten Informationen durch

- dem jeweiligen Sensor (74) zugeordnete translatorische Fehler der erfassten Drehposition aufgrund einer translatorischen Bewegung quer zur Erstreckung der Drehachse (D),
- Messfehler der Messanordnung, die nicht Fehler aufgrund einer translatorischen Bewegung sind, und
- Winkelpositionen der Sensoren um die Drehachse

ausgedrückt werden, und aus dem Rechenmodell die dem jeweiligen Sensor (74) zugeordneten translatorischen Fehler und die Messfehler der Messanordnung zu ermitteln sowie die translatorischen Fehler und die Messfehler der Messanordnung für den Betrieb der Drehvorrichtung zu korrigieren.

12. Drehvorrichtung nach Anspruch 11, wobei die Auswertungseinrichtung (122) ausgestaltet ist, unter Anwendung eines vorgegebenen Optimierungsalgorithmus iterativ Lösungen des Rechenmodells zu ermitteln, wobei in jedem Iterationsschritt Parameterwerte festgelegt sind und gemäß dem Optimierungsalgorithmus für den jeweils nächsten Iterationsschritt neue Parameterwerte gefunden werden.

13. Drehvorrichtung nach Anspruch 12, wobei die Auswertungseinrichtung ausgestaltet ist, solange iterativ nach der besten Lösung des Rechenmodells suchen, bis ein Abbruchkriterium erfüllt ist.

14. Koordinatenmessgerät mit einer Drehvorrichtung nach einem der Ansprüche 11 bis 13, wobei der erste Teil (1; 51) oder der zweite Teil (3; 53) der Drehvorrichtung mit einer Koordinatenmesseinrichtung (209, 111) zum Messen von Koordinaten des Werkstücks verbunden ist, sodass eine Position und/oder Ausrichtung der Koordinatenmesseinrichtung (209, 111) durch eine Drehbewegung des ersten Teils (1; 51) und zweiten Teils (3; 53) relativ zueinander einstellbar ist, und wobei die Auswertungseinrichtung (122) ausgestaltet ist, durch Auswertung der von den Sensoren (s2-s5, s6; 74) erfassten Drehpositionen, die unmittelbar vor, während und/oder unmittelbar nach der Drehbewegung von den Sensoren (s2-s5, s6; 74) erfasst wurden, die Effekte der translatorischen Bewegung des ersten (1; 51) und zweiten (3; 53) Teils relativ zueinander bei einer Bestimmung von Koordinaten des Werkstücks, das mit der Koordinatenmesseinrichtung (209, 111) in der eingestellten Position und/oder Ausrichtung der Koordinatenmesseinrichtung (209, 111) vermessen wird, zu berücksichtigen.

## Claims

1. Method for calibrating a measuring arrangement (74, 75) for determining rotational positions of a rotary device (51, 53) that has a first part (51) and a second part (53), which can be rotated relative to the first part (51) about a rotational axis (D), wherein:

   • measured values of rotational positions of the first part (51) and the second part (53) relative to one another are detected in various rotational positions of the rotary device (51, 53) respectively by a plurality of sensors (74), the sensors (74) being arranged at various angular positions distributed around the rotational axis (D), and a measuring signal corresponding to the detected rotational position is respectively generated, so that redundant information concerning each of the rotational positions of the rotary device (51, 53) is obtained,
   • there is provided, or has been provided, a calculation model in which differences in the rotational positions detected by various sensors (74) are formed, and specifically in each case in pairs for the rotational positions detected by two of the sensors (74) and/or in each case between a rotational position detected by one of the sensors (74) and a reference rotational position, and wherein the differences and consequently the redundant information, are expressed by

      - translational errors, assigned to the respective sensor (74), of the detected rotational position that are caused by a translational movement transverse to the extent of the rotational axis (D),
      - measuring errors of the measuring arrangement that are not errors caused by a translational movement, and
      - angular positions of the sensors about the rotational axis,

   • the translational errors assigned to the respective sensor (74) and the measuring errors of the measuring arrangement are determined from the calculation model and the measuring arrangement (74, 75) is calibrated while taking into consideration the translational errors and the measuring errors of the measuring arrangement.

2. Method according to Claim 1, wherein at least part of the measuring arrangement is calibrated by obtaining from the redundant information calibrating information that allows actual rotational positions of the first part (51) and the second part (53) relative to one another that do not depend on translational movements of the first (51) and the second (53) part relative to one another and occur reproducibly during rotational movements of the first (51) and the second (53) part relative to one another to be determined from the measuring signals of the respective sensor (74).

3. Method for operating a rotary device, wherein the rotary device has a first part (51) and a second part (53), which can be rotated relative to the first part (51) about a rotational axis (D), and wherein:

• measured values of rotational positions of the first part (51) and the second part (53) relative to one another are detected in various rotational positions of the rotary device (51, 53) respectively by a plurality of sensors (74), the sensors (74) being arranged at various angular positions distributed around the rotational axis (D), and a measuring signal corresponding to the detected rotational position is respectively generated, so that redundant information concerning each of the rotational positions of the rotary device (51, 53) is obtained,
• there is provided, or has been provided, a calculation model in which differences in the rotational positions detected by various sensors (74) are formed, and specifically in each case in pairs for the rotational positions detected by two of the sensors (74) and/or in each case between a rotational position detected by one of the sensors (74) and a reference rotational position, and wherein the differences and consequently the redundant information, are expressed by

- translational errors, assigned to the respective sensor (74), of the detected rotational position that are caused by a translational movement transverse to the extent of the rotational axis (D),
- measuring errors of the measuring arrangement that are not errors caused by a translational movement, and
- angular positions of the sensors about the rotational axis,

• the translational errors assigned to the respective sensor (74) and the measuring errors of the measuring arrangement are determined from the calculation model and the translational errors and the measuring errors of the measuring arrangement are corrected during the operation of the rotary device.

4. Method according to Claim 3, wherein the rotary device is a component part of a coordinate measuring machine (211) for measuring coordinates of a workpiece, wherein the first part (51) and the second part (53) are rotated relative to one another by a rotational movement about a rotational axis (D) and a position and/or alignment of a coordinate measuring device (209) of the coordinate measuring machine (211) is thereby set, the redundant information being obtained from rotational positions of the first part (51) and the second part (53) relative to one another that are detected by the sensors (74) directly before, during and/or directly after the rotational movement, the effects of the translational movement being taken into consideration in a determination of coordinates of a workpiece that is measured by the coordinate measuring device (209) in the set position and/or alignment of the coordinate measuring device (209).

5. Method according to one of Claims 1 to 4, wherein solutions of the calculation model are determined iteratively by applying a prescribed optimization algorithm, wherein parameter values are fixed in each iteration step and, according to the optimization algorithm, new parameter values are found for the next iteration step respectively.

6. Method according to Claim 5, wherein an iterative search is carried out for the best solution of the calculation model until a stopping criterion is satisfied.

7. Calibrating arrangement for calibrating a measuring arrangement for determining rotational positions of a rotary device that has a first part (51) and a second part (53), which can be rotated relative to the first part (51) about a rotational axis (D), wherein the calibrating arrangement has:

• a plurality of sensors (74), which are arranged at various angular positions distributed around the rotational axis (D) and are respectively arranged on one of the parts (51, 53),
• at least one measuring body (75), which is arranged on the other of the parts (51, 53) and is assigned to at least one of the sensors (74), the sensor (74) being configured to generate a measuring signal in accordance with a rotational position of the measuring body (75), and consequently in accordance with the relative rotational position of the first and the second part (53),
• an evaluation device, which is connected to the sensors (74) for receiving measuring signals of the sensors (74) and is configured to use a calculation model in which differences in the rotational positions detected by various sensors (74) are formed, and specifically in each case in pairs for the rotational positions detected by two of the sensors and/or in each case between a rotational position deteted by one of the sensors (74) and a reference rotational position, and wherein the differences and consequently the redundant information, are expressed by

- translational errors, assigned to the respective sensor (74), of the detected rotational position that are caused by a translational movement transverse to the extent of the rotational axis (D),
- measuring errors of the measuring arrangement that are not errors caused by a translational movement, and
- angular positions of the sensors about the rotational axis,

and to determine the translational errors assigned to the respective sensor (74) and the measuring errors of the measuring arrangement from the calculation model and to correct the translational errors and the measuring errors of the measuring arrangement for the operation of the rotary device.

8. Calibrating arrangement according to Claim 7, wherein the evaluation device is configured to calibrate the measuring system by obtaining from the detected rotational positions calibrating information that allows actual rotational positions of the first part (51) and the second part (53) relative to one another that do not depend on translational movements of the first (51) and the second (53) part relative to one another and occur reproducibly during rotational movements of the first (51) and the second (53) part relative to one another to be determined from the measuring signals of the respective sensor.

9. Calibrating arrangement according to Claim 7 or 8, wherein the evaluation device is configured to determine solutions of the calculation model iteratively by applying a prescribed optimization algorithm, wherein parameter values are fixed in each iteration step and, according to the optimization algorithm, new parameter values are found for the next iteration step respectively.

10. Calibrating arrangement according to Claim 9, wherein the evaluation device is configured to carry out an iterative search for the best solution of the calculation model until a stopping criterion is satisfied.

11. Rotary device, wherein the rotary device has a first part (51) and a second part (53), which can be rotated relative to the first part (51) about a rotational axis (D), and wherein the rotary device also has:

   • a plurality of sensors (74), which are arranged at various angular positions distributed around the rotational axis (D) and are respectively arranged on one of the parts (51, 53),
   • at least one measuring body (75), which is arranged on the other of the parts (51, 53) and is assigned to at least one of the sensors (74), the assigned sensor (74) being configured to generate a measuring signal in accordance with a rotational position of the measuring body (75), and consequently in accordance with a relative rotational position of the first and the second part (53),
   • an evaluation device (122), which is connected to the sensors (74) for receiving measuring signals of the sensors (74) and is configured to provide or use a calculation model in which differences in the rotational positions detected by various sensors (74) are formed, and specifically in each case in pairs for the rotational positions detected by two of the sensors (74) and/or in each case between a rotational position detected by one of the sensors (74) and a reference rotational position, and wherein the differences and consequently the redundant information, are expressed by

   - translational errors, assigned to the respective sensor (74), of the detected rotational position that are caused by a translational movement transverse to the extent of the rotational axis (D),
   - measuring errors of the measuring arrangement that are not errors caused by a translational movement, and
   - angular positions of the sensors about the rotational axis,

and to determine the translational errors assigned to the respective sensor (74) and the measuring errors of the measuring arrangement from the calculation model and to correct the translational errors and the measuring errors of the measuring arrangement for the operation of the rotary device.

12. Rotary device according to Claim 11, wherein the evaluation device (122) is configured to determine solutions of the calculation model iteratively by applying a prescribed optimization algorithm, wherein parameter values are fixed in each iteration step and, according to the optimization algorithm, new parameter values are found for the next iteration step respectively.

13. Rotary device according to Claim 12, wherein the evaluation device is configured to carry out an iterative search for the best solution of the calculation model until a stopping criterion is satisfied.

**14.** Coordinate measuring machine with a rotary device according to one of Claims 11 to 13, wherein the first part (1; 51) or the second part (3; 53) of the rotary device is connected to a coordinate measuring device (209, 111) for measuring coordinates of the workpiece, so that a position and/or alignment of the coordinate measuring device (209, 111) can be set by a rotational movement of the first part (1; 51) and the second part (3; 53) relative to one another, and wherein the evaluation device (122) is configured to take into consideration the effects of the translational movement of the first (1; 51) and the second (3; 53) part relative to one another in a determination of coordinates of the workpiece that is measured by the coordinate measuring device (209, 111) in the set position and/or alignment of the coordinate measuring device (209, 111) by evaluation of the rotational positions detected by the sensors (s2 - s5, s6; 74) that have been detected by the sensors (s2 - s5, s6; 74) directly before, during and/or directly after the rotational movement.

## Revendications

**1.** Procédé destiné au calibrage d'une disposition de mesure (74, 75) en vue de déterminer des positions de rotation d'un dispositif de rotation (51, 53), lequel présente une première partie (51) et une deuxième partie (53) capable de pivoter autour d'un axe de rotation (D), par rapport à la première partie (51), dans lequel :

• des valeurs de mesure des positions de rotation de la première partie (51) et de la deuxième partie (53) sont prélevées, l'une par rapport à l'autre, dans différentes positions de rotation du dispositif de rotation (51, 53) au moyen de, respectivement, une pluralité de capteurs (74), dans lequel les capteurs (74) sont disposés au niveau de différentes positions angulaires, en étant répartis tout autour de l'axe de rotation (D), et où est généré respectivement un signal de mesure correspondant à la position de rotation prélevée, de telle sorte que des informations redondantes sont disponibles sur chacune des positions de rotation du dispositif de rotation (51, 53) ;
• un modèle de calcul est ou sera mis à disposition, dans lequel sont formées des différences entre les positions de rotation prélevées par les différents capteurs (74), et ce notamment respectivement par paire pour les positions de rotation prélevées par deux des capteurs (74) et/ou respectivement entre une position de rotation prélevée par un des capteurs (74) et une position de rotation de référence, et dans lequel les différences et par conséquent les informations redondantes sont exprimées par l'intermédiaire :

- des erreurs translatoires, associées au capteur (74) respectif, de la position de rotation prélevée sur la base d'un mouvement translatoire établi à la transversale de l'extension de l'axe de rotation (D) ;
- des erreurs de mesure de la disposition de mesure qui ne sont pas des erreurs dues à un mouvement translatoire ; et
- des positions angulaires des capteurs autour de l'axe de rotation ;

• le modèle de calcul permet de déterminer les erreurs translatoires associées au capteur (74) respectif et les erreurs de mesure de la disposition de mesure, d'une part, ainsi que de calibrer la disposition de mesure (74, 75) en tenant compte des erreurs translatoires et des erreurs de mesure de la disposition de mesure, d'autre part.

**2.** Procédé selon la revendication 1, dans lequel tout au moins une partie de la disposition de mesure est étalonnée, dans la mesure où des informations de calibrage sont acquises à partir des informations redondantes, lesquelles permettent de déterminer, à partir des signaux de mesure du capteur (74) respectif, des positions de rotation effectives de la première partie (51) et de la deuxième partie (53) l'une par rapport à l'autre, lesquelles positions de rotation ne dépendent pas des mouvements translatoires de la première partie (51) et de la deuxième partie (53) l'une par rapport à l'autre, lesquelles se produisent de manière reproductible pendant des mouvements de rotation de la première (51) partie et de la deuxième partie (53) l'une par rapport à l'autre.

**3.** Procédé destiné à l'exploitation d'un dispositif de rotation, dans lequel le dispositif de rotation présente une première partie (51) et une deuxième partie (53) capable de pivoter autour d'un axe de rotation (D), par rapport à la première partie (51), et dans lequel :

• des valeurs de mesure des positions de rotation de la première partie (51) et de la deuxième partie (53) sont prélevées, l'une par rapport à l'autre, dans différentes positions de rotation du dispositif de rotation (51, 53) au moyen de, respectivement, une pluralité de capteurs (74), dans lequel les capteurs (74) sont disposés au niveau de différentes positions angulaires, en étant répartis tout autour de l'axe de rotation (D), et où est généré respectivement un signal de mesure correspondant à la position de rotation prélevée, de telle sorte que des informations redondantes sont disponibles sur chacune des positions de rotation du dispositif de rotation (51, 53) ;

• un modèle de calcul est ou sera mis à disposition, dans lequel sont formées des différences entre les positions de rotation prélevées par les différents capteurs (74), et ce notamment respectivement par paire pour les positions de rotation prélevées par deux des capteurs (74) et/ou respectivement entre une position de rotation prélevée par un des capteurs (74) et une position de rotation de référence, et dans lequel les différences et par conséquent les informations redondantes sont exprimées par l'intermédiaire :

- des erreurs translatoires, associées au capteur (74) respectif, de la position de rotation prélevée sur la base d'un mouvement translatoire établi à la transversale de l'extension de l'axe de rotation (D) ;
- des erreurs de mesure de la disposition de mesure qui ne sont pas des erreurs dues à un mouvement translatoire ; et
- des positions angulaires des capteurs autour de l'axe de rotation ;

• le modèle de calcul permet de déterminer les erreurs translatoires associées au capteur (74) respectif et les erreurs de mesure de la disposition de mesure, d'une part, ainsi que de corriger les erreurs translatoires et les erreurs de mesure de la disposition de mesure durant l'exploitation du dispositif de mesure, d'autre part.

4. Procédé selon la revendication 3, dans lequel le dispositif de rotation est une partie intégrante d'une machine à mesurer tridimensionnelle (211) destinée à la mesure des coordonnées d'une pièce à usiner, dans lequel la première partie (51) et la deuxième partie (53) tournent en rotation, l'une par rapport à l'autre, par l'intermédiaire d'un mouvement de rotation autour d'un axe de rotation (D) et permettant par conséquent de régler une position et/ou une orientation d'un mécanisme de mesure tridimensionnelle (209) de la machine à mesurer tridimensionnelle (211), où les informations redondantes sont obtenues à partir des positions de rotation de la première partie (51) et de la deuxième partie (53), l'une par rapport à l'autre, lesquelles positions de rotation sont prélevées par les capteurs (74) immédiatement avant, pendant et/ou immédiatement après le mouvement de rotation, et dans lequel les effets du mouvement translatoire sont pris en compte lors de la détermination des coordonnées d'une pièce à usiner, laquelle est mesurée au moyen du mécanisme de mesure tridimensionnelle (209) dans la position réglée et/ou l'orientation réglée du mécanisme de mesure tridimensionnelle (209).

5. Procédé selon l'une des revendications 1 à 4, dans lequel des solutions itératives du modèle de calcul sont obtenues en employant un algorithme d'optimisation prédéfini, dans lequel des valeurs de paramétrage sont déterminées dans chaque phase d'itération et de nouvelles valeurs de paramétrage sont trouvées pour la prochaine phase d'itération respective, en fonction de l'algorithme d'optimisation.

6. Procédé selon la revendication 5, dans lequel la meilleure solution du modèle de calcul est recherchée de manière itérative jusqu'à ce qu'un critère d'interruption soit rempli.

7. Disposition de calibrage destinée au calibrage d'une disposition de mesure en vue de déterminer des positions de rotation d'un dispositif de rotation, lequel présente une première partie (51) et une deuxième partie (53) capable de pivoter, par rapport à la première partie (51), autour d'un axe de rotation (D), où la disposition de calibrage présente :

• une pluralité de capteurs (74) qui sont disposés au niveau de différentes positions angulaires, en étant répartis tout autour de l'axe de rotation (D) et qui sont respectivement disposés au niveau de l'une des parties (51, 53) ;
• tout au moins un corps de mesure (75) qui est disposé au niveau de l'autre des parties (51, 53) et qui est associé à tout au moins l'un des capteurs (74), le capteur (74) étant conçu pour générer un signal de mesure correspondant à une position de rotation du corps de mesure (75) et correspondant par conséquent à la position de rotation relative de la première partie et de la deuxième partie (53) ;
• un mécanisme d'évaluation qui est relié aux capteurs (74) en vue de la réception des signaux de mesure des capteurs (74) et qui est conçu pour employer un modèle de calcul, dans lequel sont formées des différences entre les positions de rotation prélevées par les différents capteurs (74), et ce notamment respectivement par paire pour les positions de rotation prélevées par deux des capteurs et/ou respectivement entre une position de rotation prélevée par un des capteurs (74) et une position de rotation de référence, et dans lequel les différences et par conséquent les informations redondantes sont exprimées par l'intermédiaire :

- des erreurs translatoires, associées au capteur (74) respectif, de la position de rotation prélevée sur la base d'un mouvement translatoire établi à la transversale de l'extension de l'axe de rotation (D) ;
- des erreurs de mesure de la disposition de mesure qui ne sont pas des erreurs dues à un mouvement translatoire ; et

- des positions angulaires des capteurs autour de l'axe de rotation ;

et le modèle de calcul permet de déterminer les erreurs translatoires associées au capteur (74) respectif et les erreurs de mesure de la disposition de mesure, d'une part, ainsi que de corriger les erreurs translatoires et les erreurs de mesure de la disposition de mesure durant l'exploitation du dispositif de mesure, d'autre part.

8. Disposition de calibrage selon la revendication 7, dans laquelle le mécanisme d'évaluation est conçu pour étalonner la disposition de mesure, dans la mesure où des informations de calibrage sont obtenues à partir des positions de rotation prélevées, lesquelles permettent de déterminer, à partir des signaux de mesure du capteur respectif, des positions de rotation effectives de la première partie (51) et de la deuxième partie (53) l'une par rapport à l'autre, lesquelles positions de rotation ne dépendent pas des mouvements translatoires de la première partie (51) et de la deuxième partie (53) l'une par rapport à l'autre, lesquelles se produisent de manière reproductible pendant des mouvements de rotation de la première partie (51) et de la deuxième partie (53) l'une par rapport à l'autre.

9. Disposition de calibrage selon la revendication 7 ou 8, dans laquelle le mécanisme d'évaluation est conçu en employant un algorithme d'optimisation prédéfini, dans lequel des valeurs de paramétrage sont déterminées dans chaque phase d'itération et de nouvelles valeurs de paramétrage sont trouvées pour la prochaine phase d'itération respective, en fonction de l'algorithme d'optimisation.

10. Disposition de calibrage selon la revendication 9, dans laquelle le mécanisme d'évaluation est conçu pour chercher de manière itérative la meilleure solution du modèle de calcul jusqu'à ce qu'un critère d'interruption soit rempli.

11. Dispositif de rotation, dans lequel le dispositif de rotation présente une première partie (51) et une deuxième partie (53) capable de pivoter autour d'un axe de rotation (D) par rapport à la première partie (51) et dans lequel le dispositif de rotation présente en outre :

• une pluralité de capteurs (74) qui sont disposés au niveau de différentes positions angulaires, en étant répartis tout autour de l'axe de rotation (D) et qui sont respectivement disposés au niveau de l'une des parties (51, 53) ;
• tout au moins un corps de mesure (75) qui est disposé au niveau de l'autre des parties (51, 53) et qui est associé à tout au moins l'un des capteurs (74), le capteur (74) associé étant conçu pour générer un signal de mesure correspondant à une position de rotation du corps de mesure (75) et correspondant par conséquent à la position de rotation relative de la première partie et de la deuxième partie (53) ;
• un mécanisme d'évaluation (122) qui est relié aux capteurs (74) en vue de la réception des signaux de mesure des capteurs (74) et qui est conçu pour mettre à disposition ou pour employer un modèle de calcul, dans lequel sont formées des différences entre les positions de rotation prélevées par les différents capteurs (74), et ce notamment respectivement par paire pour les positions de rotation prélevées par deux des capteurs (74) et/ou respectivement entre une position de rotation prélevée par un des capteurs (74) et une position de rotation de référence, et dans lequel les différences et par conséquent les informations redondantes sont exprimées par l'intermédiaire :

- des erreurs translatoires, associées au capteur (74) respectif, de la position de rotation prélevée sur la base d'un mouvement translatoire établi à la transversale de l'extension de l'axe de rotation (D) ;
- des erreurs de mesure de la disposition de mesure qui ne sont pas des erreurs dues à un mouvement translatoire ; et
- des positions angulaires des capteurs autour de l'axe de rotation ;

et le modèle de calcul permet de déterminer les erreurs translatoires associées au capteur (74) respectif et les erreurs de mesure de la disposition de mesure, d'une part, ainsi que de corriger les erreurs translatoires et les erreurs de mesure de la disposition de mesure durant l'exploitation du dispositif de mesure, d'autre part.

12. Dispositif de rotation selon la revendication 11, dans lequel le mécanisme d'évaluation (122) est conçu en employant un algorithme d'optimisation prédéfini, dans lequel des valeurs de paramétrage sont déterminées dans chaque phase d'itération et de nouvelles valeurs de paramétrage sont trouvées pour la prochaine phase d'itération respective, en fonction de l'algorithme d'optimisation.

13. Dispositif de rotation selon la revendication 12, dans lequel le mécanisme d'évaluation est conçu pour chercher de manière itérative la meilleure solution du modèle de calcul jusqu'à ce qu'un critère d'interruption soit rempli.

**14.** Machine à mesurer tridimensionnelle avec un dispositif de rotation selon l'une des revendications 11 à 13, dans lequel la première partie (1 ; 51) ou la deuxième partie (3 ; 53) du dispositif de rotation est reliée à un mécanisme de mesure tridimensionnelle (209, 111) en vue de mesurer les coordonnées de la pièce à usiner, de telle sorte qu'une position et/ou une orientation du mécanisme de mesure tridimensionnelle (209, 111) peuvent être réglées par l'intermédiaire d'un mouvement de rotation de la première partie (1 ; 51) et de la deuxième partie (3 ; 53), l'une par rapport à l'autre, et dans lequel le mécanisme d'évaluation (122) est conçu pour prendre en compte, par l'évaluation des positions de rotation prélevées par les capteurs (s2-s5, s6 ; 74), lesquelles positions de rotation ont été prélevées par les capteurs (s2-s5, s6 ; 74) immédiatement avant, pendant et/ou immédiatement après le mouvement de rotation, et dans lequel les effets du mouvement translatoire de la première partie (1 ; 51) et de la deuxième partie (3 ; 53), l'une par rapport à l'autre, sont pris en compte lors d'une détermination des coordonnées de la pièce à usiner, laquelle est mesurée au moyen du mécanisme de mesure tridimensionnelle (209, 111) dans la position réglée et/ou l'orientation réglée du mécanisme de mesure tridimensionnelle (209, 111).

207

X

204

210

208

203

V

206

202

205

209

Z

201

111

121

215

211

Fig.1

Fig.2

EP 2 729 768 B1

Fig.3

Fig.4

Fig.5

Fig.6

Fig.7

Fig.8

Fig.9

Fig.9a

Fig.10

Fig.11

Fig.12

Fig.13

Fig.14

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20010025427 A1
- EP 1923670 A1
- EP 1944582 A1
- WO 2011064317 A2
- DE 19907326 A1
- EP 0325924 A1

**In der Beschreibung aufgeführte Nicht-Patentliteratur**

- **RALF B. GECKELER et al.** Calibration of angle encoders using transfer functions. *Meas. Sci. Technol.,* 2006, vol. 17, 2811-2818